# EUROPEAN PATENT APPLICATION

(11) **EP 4 852 575 A1**
(43) Date of publication of application: **09.12.2026**
(21) Application number: 25767272.5
(22) Date of filing: 28.02.2025
(51) Int. Cl.: H04W 72/20

(54) **PPDU TRANSMISSION METHOD AND APPARATUS, AND READABLE STORAGE MEDIUM**

(30) Priority: 06.03.2024 CN 202410256758
(71) Applicant: HUAWEI TECHNOLOGIES CO., LTD., Shenzhen, Guangdong 518129 (CN)
(72) Inventor: QIAN, Bin, Shenzhen, Guangdong 518129 (CN); HUANG, Lei, Shenzhen, Guangdong 518129 (CN); LI, Yunbo, Shenzhen, Guangdong 518129 (CN); YU, Jian, Shenzhen, Guangdong 518129 (CN); YANG, Xun, Shenzhen, Guangdong 518129 (CN)
(74) Representative: Huawei European IPR
(86) International application number: PCT/CN2025/079890
(87) International publication number: WO 2025/185533

(57) **Abstract**

This application relates to a PPDU transmission method and apparatus, and a readable storage medium. The method includes: An AMP device sends an AMP PPDU, where the AMP PPDU includes a signal field and a payload, the signal field indicates an MCS of the payload, the MCS of the payload is an MCS in an MCS parameter table, and an MCS corresponding to downlink transmission and an MCS corresponding to uplink transmission in the MCS parameter table are not completely the same. According to this application, uplink and downlink communication of the AMP device can be supported. This application may be applied to the AMP field, for example, to support WPT, a WLAN, or IEEE series protocols such as an AMP-related protocol in IEEE 802.11, or another protocol applicable to the IEEE 802.11 series such as 802.11a/b/g/n/ac/ax/be/bn.

## Description

This application claims priority to Chinese Patent Application No. 202410256758.5, filed with the China National Intellectual Property Administration on March 6, 2024 and entitled "PPDU TRANSMISSION METHOD AND APPARATUS, AND READABLE STORAGE MEDIUM", which is incorporated herein by reference in its entirety.

### TECHNICAL FIELD

This application relates to the field of wireless communication technologies, and in particular, to a physical layer protocol data unit (physical layer protocol data unit, PPDU) transmission method and apparatus, and a readable storage medium.

### BACKGROUND

Conventional internet of things devices are generally equipped with batteries with a limited service life. However, with significant growth of internet of things networks and internet of things devices, maintenance costs (including labor and battery costs) also increase greatly. For example, billions of batteries are discarded each year, of which only a small fraction can be recycled, causing harmful impact on the Earth's ecosystem. For another example, under extreme environmental conditions (such as high voltage, high temperature, extremely low temperature, and humid environments), it may be extremely difficult to maintain the operation of internet of things networks and replace batteries. To resolve the foregoing problem, battery-free internet of things communication is proposed. By harvesting ambient power, this approach can effectively improve network performance and sustainability, thereby expanding application scenarios. In addition, the battery is removed, so that a device size and costs can be significantly reduced, to support various new applications.

Currently, the Institute of Electrical and Electronics Engineers (the institute of electrical and electronics engineers, IEEE) 802.11 working group is discussing an internet of things device supporting a power harvesting capability. The project is named ambient power (ambient power, AMP). The internet of things device supporting the power harvesting capability discussed in this project may be referred to as an AMP internet of things device or an AMP device, and may implement battery-free communication. This type of device may harvest power from different sources (for example, radio waves, light (sunlight), motion, and heat), to resolve the problems posed by conventional batteries.

Similar to a conventional wireless communication device (for example, a Wi-Fi (wireless fidelity, wireless fidelity) device), the AMP device may transmit information via a physical layer protocol data unit (physical layer protocol data unit, PPDU). The PPDU generally includes a signal (signal, SIG) field, which is used to assist a receive end in correctly demodulating data. Therefore, how to design a signal (SIG) field applicable to the AMP device is a problem being studied by a person skilled in the art.

### SUMMARY

Embodiments of this application provide a PPDU transmission method and apparatus, and a readable storage medium. A signal (SIG) field is designed, so that the signal field is applicable to an AMP device, to support uplink and downlink communication of the AMP device.

The following describes this application from different aspects. It should be understood that mutual reference may be made to the following implementations and beneficial effects of different aspects.

"Transmission" in this application may be understood as "sending" and/or "receiving". The AMP device in this application may be a wireless communication device supporting AMP, for example, a high efficiency (high efficiency, HE) access point (access point, AP), an HE station (station, STA), an extremely high throughput (extremely high throughput, EHT) AP, an EHT STA, or an access point/station applicable to a future-generation Wi-Fi standard that supports AMP.

According to a first aspect, this application provides a PPDU transmission (which may be understood as sending herein) method. The method may be applied to the ambient power (AMP) field, for example, may support wireless power transfer (wireless power transfer, WPT), a wireless local area network (wireless local area network, WLAN), or IEEE series protocols. The method includes: A first communication apparatus generates and sends a PPDU, where the PPDU includes a signal field and a payload, the signal field includes first information, and the first information indicates a modulation and coding scheme (modulation and coding scheme, MCS) of the payload (payload). The MCS of the payload is an MCS in an MCS parameter table, and an MCS corresponding to downlink transmission and an MCS corresponding to uplink transmission in the MCS parameter table are not completely the same. For example, for specific content of the MCS parameter table, refer to descriptions in the following method embodiments. Details are not described herein.

It may be understood that "not completely the same" in this application may include two meanings: "completely different (that is, there is no intersection between the two)" and "partially different". It may be further understood that the modulation and coding scheme (MCS) includes content in two aspects: a rate (data rate) and a modulation (modulation) scheme.

For example, the PPDU may be an AMP PPDU. In this application, "AMP PPDU" may be understood as a PPDU sent or received by a wireless communication device supporting AMP (or referred to as an AMP device), or a PPDU defined in an AMP-related protocol.

For example, the first communication apparatus may be a communication apparatus supporting AMP, for example, an HE STA, an HE AP, an EHT STA, or an EHT AP supporting AMP.

In this application, given that different types of APM devices have different capabilities, in some scenarios, uplink and downlink link budgets are unbalanced for some APM devices (for example, a maximum uplink transmission distance is far greater than a maximum downlink transmission distance). In this case, in this application, MCS parameters that are not completely the same are designed for an uplink payload and a downlink payload, to adapt to characteristics of uplink transmission and downlink transmission, and support uplink and downlink communication of the AMP device.

According to a second aspect, this application provides a PPDU transmission (which may be understood as receiving herein) method. The method may be applied to the AMP field, for example, may support WPT, a WLAN, or IEEE series protocols. The method includes: A second communication apparatus receives and processes a PPDU, where the PPDU includes a signal field and a payload, the signal field includes first information, and the first information indicates an MCS of the payload (payload). The MCS of the payload is an MCS in an MCS parameter table, and an MCS corresponding to downlink transmission and an MCS corresponding to uplink transmission in the MCS parameter table are not completely the same. For example, for specific content of the MCS parameter table, refer to descriptions in the following method embodiments. Details are not described herein.

For example, the PPDU may be an AMP PPDU.

For example, the second communication apparatus may be a communication apparatus supporting AMP, for example, an HE STA, an HE AP, an EHT STA, or an EHT AP supporting AMP.

With reference to the first aspect or the second aspect, in a possible implementation, that the MCS corresponding to downlink transmission and the MCS corresponding to uplink transmission in the MCS parameter table are not completely the same includes: In the MCS parameter table, a maximum rate of the MCS corresponding to uplink transmission is greater than a maximum rate of the MCS corresponding to downlink transmission, and/or in the MCS parameter table, a minimum rate of the MCS corresponding to uplink transmission is greater than a minimum rate of the MCS corresponding to downlink transmission.

With reference to the first aspect or the second aspect, in a possible implementation, that the MCS corresponding to downlink transmission and the MCS corresponding to uplink transmission in the MCS parameter table are not completely the same further includes: A modulation scheme of the MCS corresponding to downlink transmission in the MCS parameter table is on-off keying (On-Off keying, OOK) modulation; and a modulation scheme of the MCS corresponding to uplink transmission in the MCS parameter table includes one or more of the following: phase shift keying (phase shift keying, PSK) modulation, frequency-shift keying (Frequency-shift keying, FSK) modulation, OOK modulation, spread spectrum, or complementary code keying (complementary code keying, CCK) modulation. For example, spread spectrum may be direct sequence spread spectrum (direct sequence spread spectrum, DSSS).

For example, the MCS parameter table includes one or more of Table 3a, Table 3b, Table 3c, Table 4a, Table 4b, Table 5a, Table 5b, or Table 5c below. In other words, the MCS of the payload that is indicated by the first information may be one of Table 3a, Table 3b, Table 3c, Table 4a, Table 4b, Table 5a, Table 5b, or Table 5c below.

For example, a value of the first information may be equal to an MCS index, one MCS index may identify one MCS, and one MCS may correspond to one or more MCS indexes.

In this application, MCS parameters that are not completely the same are designed for the uplink payload and the downlink payload, to adapt to the characteristics of uplink transmission and downlink transmission respectively (for example, the maximum uplink transmission distance is greater than the maximum downlink transmission distance). For example, in this application, for uplink transmission, a rate and/or an order of a modulation scheme in the MCS of the payload are/is higher, which can reduce an air interface occupancy time of uplink transmission, thereby reducing interference to another device; and for downlink transmission, a rate and/or an order of a modulation scheme in the MCS of the payload are/is lower, which can improve reliability of downlink transmission.

With reference to the first aspect or the second aspect, in a possible implementation, the signal field further includes second information, and the second information indicates a length of the payload (payload). The second information meets the following condition: When the PPDU is an uplink PPDU, a length of the second information is a first value, or when the PPDU is a downlink PPDU, a length of the second information is a second value, where the first value is less than the second value.

For example, the length of the payload meets the following condition: When the PPDU is an uplink PPDU, the length of the payload is equal to a product of a value of the second information and K1, or when the PPDU is a downlink PPDU, the length of the payload is equal to a product of a value of the second information and K2, where K1 is greater than K2, and K2 is a positive integer.

It may be understood that, in application of AMP, the downlink is mainly used to transmit control information, scheduling information, wake-up information, and the like. The uplink is mainly used for identifier reporting, sensor data collection, positioning information exchange, and the like. In this application, in consideration of a difference in content between an uplink payload and a downlink payload, the second information is designed separately for the uplink PPDU and the downlink PPDU. In addition, the length of the second information in the uplink PPDU is less than the length of the second information in the downlink PPDU, so that uplink signaling overheads can be reduced.

With reference to the first aspect or the second aspect, in a possible implementation, the PPDU further includes a synchronization field, and the synchronization field is the same as a wake-up radio (wake-up radio, WUR) synchronization field. In this case, a receive end may not be able to distinguish between a WUR PPDU and an AMP PPDU. Therefore, the signal field may further include third information, and the third information may indicate that the PPDU is an AMP PPDU.

For example, an MCS of the signal field includes any one of the following: a rate of 62.5 kbps and OOK modulation; or a rate of 250 kbps and OOK modulation. In other words, the MCS of the signal field is implicitly/indirectly indicated by the synchronization field.

In this application, when the synchronization field in the AMP PPDU is the same as the WUR synchronization field, the third information is added to the signal field to indicate whether the type of the PPDU is an AMP PPDU, so that the receive end may distinguish between an AMP PPDU and a WUR PPDU.

With reference to the first aspect or the second aspect, in a possible implementation, the signal field further includes one or more of the following: a version number (Version Number) field, a DL/UL indication (DL/UL Indication) field, a transmission opportunity (transmission opportunity, TXOP) duration (TXOP Duration) field, or a cyclic redundancy check (cyclic redundancy check, CRC) field. The version number field may indicate a version number used by the PPDU, and may serve for backward compatibility. The DL/UL indication field may indicate uplink transmission or downlink transmission, or indicate a DL/UL indication of the PPDU. The TXOP duration field may indicate a channel occupancy time. The CRC field indicates a cyclic redundancy check code.

In this application, a version number, a DL/UL indication, a channel occupancy time, a CRC code, or the like are carried in the signal field, to help the receive end correctly demodulate data.

With reference to the first aspect or the second aspect, in a possible implementation, the PPDU further includes a synchronization field, and the synchronization field is different from a WUR synchronization field. It may be understood that, when the synchronization field in the PPDU is different from the WUR synchronization field, an AMP PPDU and a WUR PPDU may be distinguished by respective synchronization fields, and information does not need to be carried in the signal field to indicate the AMP PPDU.

In this application, the synchronization field in the AMP PPDU is constrained to be different from the WUR synchronization field, so that signaling overheads can be reduced.

With reference to the first aspect or the second aspect, in a possible implementation, when the synchronization field in the AMP PPDU is different from the WUR synchronization field, an MCS of the signal field in the AMP PPDU may be predefined. For example, the MCS of the signal field may be defined as a rate of 62.5 kbps and OOK modulation.

Alternatively, the signal field includes a first signal subfield and a second signal subfield. An MCS of the first signal subfield is predefined, and the first signal subfield may indicate an MCS of the second signal subfield. The first information may be located in the first signal subfield. For example, information a (the information a is different from the first information) exists in the first signal subfield, and indicates the MCS of the second signal subfield. Alternatively, the MCS of the second signal subfield is related to the MCS of the payload that is indicated by the first information, or the MCS of the second signal subfield is determined based on the MCS of the payload that is indicated by the first information. In other words, the first signal subfield (in which the first information is located) may indirectly indicate the MCS of the second signal subfield.

In this application, the MCS of the signal field is constrained in a predefined manner, so that the signaling overheads can be reduced, and reliability of the signal field can be improved.

With reference to the first aspect or the second aspect, in a possible implementation, when the synchronization field in the AMP PPDU is different from the WUR synchronization field, the synchronization field may indirectly indicate a DL/UL indication of the PPDU. In this case, the signal field may not include the DL/UL indication field.

For example, that the MCS of the signal field is predefined includes: When the synchronization field indicates uplink, the MCS of the signal field is a predefined first MCS, or when the synchronization field indicates downlink, the MCS of the signal field is a predefined second MCS, where the first MCS is different from the second MCS. For example, a rate in the first MCS is higher than a rate in the second MCS, and/or a modulation order of a modulation scheme in the first MCS is higher than a modulation order of a modulation scheme in the second MCS.

For example, that the MCS of the first signal subfield is predefined includes: When the synchronization field indicates uplink, the MCS of the first signal subfield is a predefined first MCS, or when the synchronization field indicates downlink, the MCS of the first signal subfield is a predefined second MCS, where the first MCS is different from the second MCS. For example, a rate in the first MCS is higher than a rate in the second MCS, and/or a modulation order of a modulation scheme in the first MCS is higher than a modulation order of a modulation scheme in the second MCS.

In this application, the MCS of the signal field is separately designed for uplink transmission and downlink transmission, and the MCS of the signal field for uplink transmission is different from the MCS of the signal field for downlink transmission, thereby improving reliability of the signal field, and reducing an air interface occupancy time of the uplink signal field.

With reference to the first aspect or the second aspect, in a possible implementation, when the synchronization field in the AMP PPDU is different from the WUR synchronization field, the synchronization field may indirectly indicate an MCS of the signal field in the PPDU.

For example, the MCS of the signal field may be an MCS in the MCS parameter table, and an MCS corresponding to downlink transmission and an MCS corresponding to uplink transmission in the MCS parameter table are not completely the same. For specific content of the MCS parameter table, refer to descriptions in the following method embodiments. Details are not described herein. For example, the MCS of the signal field is any one of Table 3a, Table 3b, Table 3c, Table 4a, Table 4b, Table 5a, Table 5b, or Table 5c below.

With reference to the first aspect or the second aspect, in a possible implementation, when the synchronization field in the AMP PPDU is different from the WUR synchronization field, the synchronization field may indirectly indicate an MCS of the signal field in the PPDU and a DL/UL indication of the PPDU.

For example, the MCS of the signal field may be any one of Table 4a, Table 4b, Table 5a, Table 5b, or Table 5c below.

In this application, the synchronization field in the AMP PPDU indicates the MCS of the signal field, which is more flexible in design.

According to a third aspect, this application provides a communication apparatus. The communication apparatus is configured to perform the method according to any one of the first aspect or the possible implementations of the first aspect. The communication apparatus includes a module configured to perform the method according to any one of the first aspect or the possible implementations of the first aspect.

According to a fourth aspect, this application provides a communication apparatus. The communication apparatus is configured to perform the method according to any one of the second aspect or the possible implementations of the second aspect. The communication apparatus includes a module configured to perform the method according to any one of the second aspect or the possible implementations of the second aspect.

In the third aspect or the fourth aspect, the communication apparatus may include a transceiver module and a processing module. For detailed descriptions of the transceiver module and the processing module, refer to apparatus embodiments described below. For beneficial effects of the third aspect and the fourth aspect, refer to related descriptions of the first aspect and the second aspect. Details are not described herein again.

According to a fifth aspect, this application provides a PPDU transmission (which may be understood as sending herein) method. The method may be applied to the AMP field, for example, may support WPT, a WLAN, or IEEE series protocols. The method includes: A first communication apparatus generates and sends a PPDU, where the PPDU includes a signal field and a payload, the signal field includes second information, and the second information indicates a length of the payload (payload). The second information meets the following condition: When the PPDU is an uplink PPDU, a length of the second information is a first value, or when the PPDU is a downlink PPDU, a length of the second information is a second value, where the first value is less than the second value.

For example, the PPDU may be an AMP PPDU.

For example, the first communication apparatus may be a communication apparatus supporting AMP, for example, an HE STA, an HE AP, an EHT STA, or an EHT AP supporting AMP.

It may be understood that, in application of AMP, the downlink is mainly used to transmit control information, scheduling information, wake-up information, and the like. The uplink is mainly used for identifier reporting, sensor data collection, positioning information exchange, and the like. In this application, in consideration of a difference in content between an uplink payload and a downlink payload, the second information is designed separately for the uplink PPDU and the downlink PPDU. In addition, the length of the second information in the uplink PPDU is less than the length of the second information in the downlink PPDU, so that uplink signaling overheads can be reduced.

According to a sixth aspect, this application provides a PPDU transmission (which may be understood as receiving herein) method. The method may be applied to the AMP field, for example, may support WPT, a WLAN, or IEEE series protocols. The method includes: A second communication apparatus receives and processes a PPDU, where the PPDU includes a signal field and a payload, the signal field includes second information, and the second information indicates a length of the payload (payload). The second information meets the following condition: When the PPDU is an uplink PPDU, a length of the second information is a first value, or when the PPDU is a downlink PPDU, a length of the second information is a second value, where the first value is less than the second value.

For example, the PPDU may be an AMP PPDU.

For example, the second communication apparatus may be a communication apparatus supporting AMP, for example, an HE STA, an HE AP, an EHT STA, or an EHT AP supporting AMP.

With reference to the fifth aspect or the sixth aspect, in a possible implementation, the length of the payload meets the following condition: When the PPDU is an uplink PPDU, the length of the payload is equal to a product of a value of the second information and K1, or when the PPDU is a downlink PPDU, the length of the payload is equal to a product of a value of the second information and K2, where K1 is greater than K2, and K2 is a positive integer.

With reference to the fifth aspect or the sixth aspect, in a possible implementation, the PPDU further includes a synchronization field, and the synchronization field is the same as a WUR synchronization field. In this case, a receive end may not be able to distinguish between a WUR PPDU and an AMP PPDU. Therefore, the signal field may further include third information, and the third information may indicate that the PPDU is an AMP PPDU.

For example, an MCS of the signal field includes any one of the following: a rate of 62.5 kbps and OOK modulation; or a rate of 250 kbps and OOK modulation. In other words, the MCS of the signal field is implicitly/indirectly indicated by the synchronization field.

In this application, when the synchronization field in the AMP PPDU is the same as the WUR synchronization field, the third information is added to the signal field to indicate whether the type of the PPDU is an AMP PPDU, so that the receive end may distinguish between an AMP PPDU and a WUR PPDU.

With reference to the fifth aspect or the sixth aspect, in a possible implementation, the signal field further includes one or more of the following: a version number (Version Number) field, a DL/UL indication (DL/UL Indication) field, a transmission opportunity duration (TXOP Duration) field, or a cyclic redundancy check (CRC) field. The version number field may indicate a version number used by the PPDU, and may serve for backward compatibility. The DL/UL indication field may indicate uplink transmission or downlink transmission, or indicate a DL/UL indication of the PPDU. The TXOP duration field may indicate a channel occupancy time. The CRC field indicates a cyclic redundancy check code.

In this application, a version number, a DL/UL indication, a channel occupancy time, a CRC code, or the like are carried in the signal field, to help the receive end correctly demodulate data.

With reference to the fifth aspect or the sixth aspect, in a possible implementation, the PPDU further includes a synchronization field, and the synchronization field is different from a WUR synchronization field. It may be understood that, when the synchronization field in the PPDU is different from the WUR synchronization field, an AMP PPDU and a WUR PPDU may be distinguished by respective synchronization fields, and information does not need to be carried in the signal field to indicate the AMP PPDU.

In this application, the synchronization field in the AMP PPDU is constrained to be different from the WUR synchronization field, so that signaling overheads can be reduced.

With reference to the fifth aspect or the sixth aspect, in a possible implementation, when the synchronization field in the AMP PPDU is different from the WUR synchronization field, an MCS of the signal field in the AMP PPDU may be predefined. For example, the MCS of the signal field may be defined as a rate of 62.5 kbps and OOK modulation.

Alternatively, the signal field includes a first signal subfield and a second signal subfield. An MCS of the first signal subfield is predefined, and the first signal subfield may indicate an MCS of the second signal subfield. The first information may be located in the first signal subfield. For example, information a (the information a is different from the first information) exists in the first signal subfield, and indicates the MCS of the second signal subfield. Alternatively, the MCS of the second signal subfield is related to the MCS of the payload that is indicated by the first information, or the MCS of the second signal subfield is determined based on the MCS of the payload that is indicated by the first information. In other words, the first signal subfield (in which the first information is located) may indirectly indicate the MCS of the second signal subfield.

In this application, the MCS of the signal field is constrained in a predefined manner, so that the signaling overheads can be reduced, and reliability of the signal field can be improved.

With reference to the fifth aspect or the sixth aspect, in a possible implementation, when the synchronization field in the AMP PPDU is different from the WUR synchronization field, the synchronization field may indirectly indicate a DL/UL indication of the PPDU. In this case, the signal field may not include the DL/UL indication field.

For example, that the MCS of the signal field is predefined includes: When the synchronization field indicates uplink, the MCS of the signal field is a predefined first MCS, or when the synchronization field indicates downlink, the MCS of the signal field is a predefined second MCS, where the first MCS is different from the second MCS. For example, a rate in the first MCS is higher than a rate in the second MCS, and/or a modulation order of a modulation scheme in the first MCS is higher than a modulation order of a modulation scheme in the second MCS.

For example, that the MCS of the first signal subfield is predefined includes: When the synchronization field indicates uplink, the MCS of the first signal subfield is a predefined first MCS, or when the synchronization field indicates downlink, the MCS of the first signal subfield is a predefined second MCS, where the first MCS is different from the second MCS. For example, a rate in the first MCS is higher than a rate in the second MCS, and/or a modulation order of a modulation scheme in the first MCS is higher than a modulation order of a modulation scheme in the second MCS.

In this application, the MCS of the signal field is separately designed for uplink transmission and downlink transmission, and the MCS of the signal field for uplink transmission is different from the MCS of the signal field for downlink transmission, thereby improving reliability of the signal field, and reducing an air interface occupancy time of the uplink signal field.

With reference to the fifth aspect or the sixth aspect, in a possible implementation, when the synchronization field in the AMP PPDU is different from the WUR synchronization field, the synchronization field may indirectly indicate an MCS of the signal field in the PPDU.

For example, the MCS of the signal field may be an MCS in the MCS parameter table, and an MCS corresponding to downlink transmission and an MCS corresponding to uplink transmission in the MCS parameter table are not completely the same. For specific content of the MCS parameter table, refer to descriptions in the following method embodiments. Details are not described herein. For example, the MCS of the signal field is any one of Table 3a, Table 3b, Table 3c, Table 4a, Table 4b, Table 5a, Table 5b, or Table 5c below.

With reference to the fifth aspect or the sixth aspect, in a possible implementation, when the synchronization field in the AMP PPDU is different from the WUR synchronization field, the synchronization field may indirectly indicate an MCS of the signal field in the PPDU and a DL/UL indication of the PPDU.

For example, the MCS of the signal field may be any one of Table 4a, Table 4b, Table 5a, Table 5b, or Table 5c below.

In this application, the synchronization field in the AMP PPDU indicates the MCS of the signal field, which is more flexible in design.

According to a seventh aspect, this application provides a communication apparatus. The communication apparatus is configured to perform the method according to any one of the fifth aspect or the possible implementations of the fifth aspect. The communication apparatus includes a module configured to perform the method according to any one of the fifth aspect or the possible implementations of the fifth aspect.

According to an eighth aspect, this application provides a communication apparatus. The communication apparatus is configured to perform the method according to any one of the sixth aspect or the possible implementations of the sixth aspect. The communication apparatus includes a module configured to perform the method according to any one of the sixth aspect or the possible implementations of the sixth aspect.

In the seventh aspect or the eighth aspect, the communication apparatus may include a transceiver module and a processing module. For detailed descriptions of the transceiver module and the processing module, refer to apparatus embodiments described below. For beneficial effects of the seventh aspect and the eighth aspect, refer to related descriptions of the fifth aspect and the sixth aspect. Details are not described herein again.

According to a ninth aspect, this application provides a PPDU transmission (which may be understood as sending herein) method. The method may be applied to the AMP field, for example, may support WPT, a WLAN, or IEEE series protocols. The method includes: A first communication apparatus generates and sends a PPDU, where the PPDU includes a synchronization field and a signal field, and the synchronization field is different from a WUR synchronization field. For descriptions of an MCS of the signal field, refer to descriptions of the following method embodiments.

For example, the PPDU may be an AMP PPDU.

For example, the first communication apparatus may be a communication apparatus supporting AMP, for example, an HE STA, an HE AP, an EHT STA, or an EHT AP supporting AMP.

According to a tenth aspect, this application provides a PPDU transmission (which may be understood as sending herein) method. The method may be applied to the AMP field, for example, may support WPT, a WLAN, or IEEE series protocols. The method includes: A second communication apparatus receives and processes a PPDU, where the PPDU includes a synchronization field and a signal field, and the synchronization field is different from a WUR synchronization field. For descriptions of an MCS of the signal field, refer to descriptions of the following method embodiments.

For example, the PPDU may be an AMP PPDU.

For example, the second communication apparatus may be a communication apparatus supporting AMP, for example, an HE STA, an HE AP, an EHT STA, or an EHT AP supporting AMP.

With reference to the ninth aspect or the tenth aspect, in a possible implementation, the MCS of the signal field is predefined, for example, a rate of 62.5 kbps and OOK modulation.

Alternatively, the signal field includes a first signal subfield and a second signal subfield, an MCS of the first signal subfield is predefined, and the first signal subfield indicates an MCS of the second signal subfield and/or an MCS of a payload (payload) in the PPDU. For example, the first signal subfield may indicate the MCS of the payload in the PPDU, and the MCS of the second signal subfield is related to the MCS of the payload in the PPDU, or is determined based on the MCS of the payload in the PPDU.

In this application, the MCS of the signal field is constrained in a predefined manner, so that signaling overheads can be reduced, and reliability of the signal field can be improved.

For example, the synchronization field may indirectly indicate a DL/UL indication of the PPDU. Alternatively, the synchronization field may indirectly indicate the MCS of the payload in the PPDU.

For example, that the MCS of the first signal subfield is predefined includes: When the synchronization field indicates uplink, the MCS of the first signal subfield is a predefined first MCS, or when the synchronization field indicates downlink, the MCS of the first signal subfield is a predefined second MCS, where the first MCS is different from the second MCS. For example, a rate in the first MCS is higher than a rate in the second MCS, and/or a modulation order of a modulation scheme in the first MCS is higher than a modulation order of a modulation scheme in the second MCS.

In this application, the MCS of the signal field is separately designed for uplink transmission and downlink transmission, and the MCS of the signal field for uplink transmission is different from the MCS of the signal field for downlink transmission, thereby improving reliability of the signal field, and reducing an air interface occupancy time of the uplink signal field.

With reference to the ninth aspect or the tenth aspect, in a possible implementation, the synchronization field may indirectly indicate a DL/UL indication of the PPDU. When the synchronization field indicates uplink, the MCS of the signal field is a predefined first MCS, or when the synchronization field indicates downlink, the MCS of the signal field is a predefined second MCS, where the first MCS is different from the second MCS.

With reference to the ninth aspect or the tenth aspect, in a possible implementation, the synchronization field may indirectly indicate an MCS of the signal field. The MCS of the signal field is an MCS in an MCS parameter table, and an MCS corresponding to downlink transmission and an MCS corresponding to uplink transmission in the MCS parameter table are not completely the same. For example, the MCS parameter table includes one or more of Table 3a, Table 3b, Table 3c, Table 4a, Table 4b, Table 5a, Table 5b, or Table 5c below.

In this application, the synchronization field in the AMP PPDU indicates the MCS of the signal field, which is more flexible in design.

With reference to the ninth aspect or the tenth aspect, in a possible implementation, the synchronization field may indirectly indicate an MCS of the signal field in the PPDU and a DL/UL indication of the PPDU. For example, the MCS of the signal field may be any one of Table 4a, Table 4b, Table 5a, Table 5b, or Table 5c below.

According to an eleventh aspect, this application provides a communication apparatus. The communication apparatus is configured to perform the method according to any one of the ninth aspect or the possible implementations of the ninth aspect. The communication apparatus includes a module configured to perform the method according to any one of the ninth aspect or the possible implementations of the ninth aspect.

According to a twelfth aspect, this application provides a communication apparatus. The communication apparatus is configured to perform the method according to any one of the tenth aspect or the possible implementations of the tenth aspect. The communication apparatus includes a module configured to perform the method according to any one of the tenth aspect or the possible implementations of the tenth aspect.

In the eleventh aspect or the twelfth aspect, the communication apparatus may include a transceiver module and a processing module. For detailed descriptions of the transceiver module and the processing module, refer to apparatus embodiments described below. For beneficial effects of the eleventh aspect and the twelfth aspect, refer to related descriptions of the ninth aspect and the tenth aspect. Details are not described herein again.

According to a thirteenth aspect, this application provides a communication apparatus. The communication apparatus includes a processor, configured to perform the method according to any one of the first aspect, the second aspect, the fifth aspect, the sixth aspect, the ninth aspect, the tenth aspect, or the possible implementations of any one of the aspects. Alternatively, the processor is configured to execute a program stored in a memory. When the program is executed, the method according to any one of the first aspect, the second aspect, the fifth aspect, the sixth aspect, the ninth aspect, the tenth aspect, or the possible implementations of any one of the aspects is performed.

With reference to the thirteenth aspect, in a possible implementation, the memory is located outside the communication apparatus.

With reference to the thirteenth aspect, in a possible implementation, the memory is located inside the communication apparatus.

In this application, the processor and the memory may alternatively be integrated into one device. In other words, the processor and the memory may alternatively be integrated together. For example, the communication apparatus may be a chip.

With reference to the thirteenth aspect, in a possible implementation, the communication apparatus further includes a transceiver, and the transceiver is configured to send or receive a PPDU.

According to a fourteenth aspect, this application provides a communication apparatus. The communication apparatus includes a logic circuit and an interface, and the logic circuit is coupled to the interface. The interface is configured to exchange (or receive/send or input/output) information or data, and the logic circuit is configured to run program instructions, so that the communication apparatus performs the method described in any one of the first aspect, the second aspect, the fifth aspect, the sixth aspect, the ninth aspect, the tenth aspect, or any possible implementation of any one of the aspects. The interface may be a communication interface or a transceiver. The transceiver may be a radio frequency module, a combination of a radio frequency module and an antenna, or an input/output interface of a chip or a circuit in the communication apparatus.

According to a fifteenth aspect, this application provides a readable storage medium. The readable storage medium stores program instructions. When the program instructions are run on a computer, the computer is enabled to perform the method described in any one of the first aspect, the second aspect, the fifth aspect, the sixth aspect, the ninth aspect, the tenth aspect, or any possible implementation of any one of the aspects.

According to a sixteenth aspect, this application provides a computer program product including program instructions. When the computer program product is run, the method described in any one of the first aspect, the second aspect, the fifth aspect, the sixth aspect, the ninth aspect, the tenth aspect, or any possible implementation of any one of the aspects is performed.

According to a seventeenth aspect, this application provides a communication system. The communication system includes a first communication apparatus and a second communication apparatus. The first communication apparatus is configured to perform the method described in any one of the first aspect, the fifth aspect, the ninth aspect, or any possible implementation of any one of the aspects, and the second communication apparatus is configured to perform the method described in any one of the second aspect, the sixth aspect, the tenth aspect, or any possible implementation of any one of the aspects.

For technical effects achieved in the foregoing aspects, refer to each other or refer to beneficial effects in method embodiments described below. Details are not repeated herein.

### BRIEF DESCRIPTION OF DRAWINGS

FIG. 1 is a diagram of a network architecture of a wireless communication system according to an embodiment of this application;
FIG. 2 is a diagram of a frame format of a WUR PPDU according to an embodiment of this application;
FIG. 3 is a diagram of a frame format of a WUR-Data field according to an embodiment of this application;
FIG. 4 is a diagram of a possible frame format of an AMP PPDU according to an embodiment of this application;
FIG. 5A and FIG. 5B are diagrams of two configurations of backscatter communication according to an embodiment of this application;
FIG. 6 is a schematic flowchart of a PPDU transmission method according to an embodiment of this application;
FIG. 7 is another schematic flowchart of a PPDU transmission method according to an embodiment of this application;
FIG. 8A and FIG. 8B are diagrams of a frame format of an AMP signal field according to an embodiment of this application;
FIG. 9A and FIG. 9B are diagrams of a frame format of a DL/UL dependent parameters field according to an embodiment of this application;
FIG. 10 is still another schematic flowchart of a PPDU transmission method according to an embodiment of this application;
FIG. 11 is a diagram of a structure of a communication apparatus according to an embodiment of this application;
FIG. 12 is a diagram of another structure of a communication apparatus according to an embodiment of this application; and
FIG. 13 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, "first", "second", and the like are merely intended to distinguish between different objects but do not indicate a particular order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. "One or more of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c each may be singular or plural.

In this application, unless otherwise specified, an element indicated in a singular form is intended to indicate "one or more", but does not indicate "one and only one".

In this application, the term "example" or "for example" is used to represent giving an example, an illustration, or a description. Any embodiment or design scheme described with "example", "in an example" or "for example" in this application should not be construed as being more preferred or having more advantages than another embodiment or design scheme. Exactly, use of the term "example", "in an example", "for example", or the like is intended to present a related concept in a specific manner.

In embodiments of this application, "B corresponding to A," "A corresponds to B," or a similar expression indicates that B is associated with A and B may be determined based on A. Determining B based on A does not mean that B is determined based only on A. B may alternatively be determined based on A and/or other information.

In this application, "indication" may include a direct indication, an indirect indication, an explicit indication, and an implicit indication. When a piece of information is described as indicating A, it may be understood that the information carries A, directly indicates A, or indirectly indicates A.

"Transmission" in this application may also be described as "sending" and/or "receiving". "Sending" and "Receiving" may indicate a direction of signal transmission. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "outputting" of a chip interface, and "receiving" may also be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

The technical solutions provided in embodiments of this application may be applied to the AMP field, for example, may support wireless power transfer (wireless power transfer, WPT), a wireless local area network (wireless local area network, WLAN), or Institute of Electrical and Electronics Engineers (institute of electrical and electronics engineers, IEEE) series protocols.

The technical solutions provided in embodiments of this application may be applicable to an AMP-related protocol in IEEE 802.11, or may be applicable to another protocol of the IEEE 802.11 series such as 802.11a/b/g, 802.11n, 802.11ac, 802.11ax, 802.11be (also referred to as Wi-Fi 7 or extremely high throughput (extremely high throughput, EHT)), 802.11ad, 802.11ay, 802.11bn (802.11bn is also referred to as Wi-Fi 8, or referred to as ultra-high reliability (ultra-high reliability, UHR)), or a next-generation protocol of 802.11bn. Examples are not enumerated herein. The technical solutions provided in embodiments of this application may be further applied to a wireless personal area network (wireless personal area network, WPAN) based on millimeter wave (millimeter wave, MMW) and ultra wideband (ultra wideband, UWB) technologies, and the like. For example, the technical solutions provided in embodiments of this application may be applied to IEEE 802.15 series protocols, for example, the 802.15.4a protocol, the 802.15.4z protocol, the 802.15.4ab protocol, or a future-generation UWB WPAN protocol. Examples are not enumerated herein. The technical solutions provided in embodiments of this application may also be applied to a sensing (sensing) system, for example, 802.11bf series standards.

The 802.11n standard is referred to as a high throughput (high throughput, HT) standard, the 802.11ac standard is referred to as a very high throughput (very high throughput, VHT) standard, the 802.11ax standard is referred to as a high efficient (high efficient, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz is mainly based on 802.11ac, 802.11ax, 802.11be, and a next-generation standard. An implementation of 60 GHz is mainly based on 802.11ad, 802.11ay, a next-generation standard, and the like. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

The technical solutions provided in embodiments of this application may be further applied to the following communication systems, for example, an internet of things (internet of things, IoT) system, vehicle-to-everything (vehicle-to-everything, V2X, where X may represent anything), device-to-device (device-to-device, D2D), a narrow band internet of things (narrow band internet of things, NB-IoT) system, a long term evolution (long term evolution, LTE) system, a 5th-generation (5th-generation, 5G) communication system, a new communication system emerging in future communication development, and the like. For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions in embodiments of this application may be applicable to a communication scenario between an access point and a station. In embodiments of this application, the term "communication" may also be described as "data transmission", "information transmission", or "transmission".

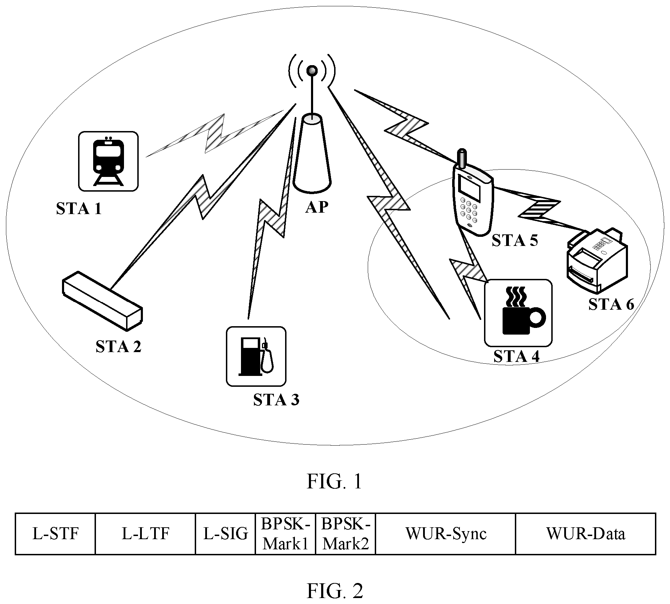

FIG. 1 is a diagram of a network architecture of a wireless communication system according to an embodiment of this application. As shown in FIG. 1, the wireless communication system may include one or more access point (access point, AP) stations (stations, STAs), and one or more non-access point stations (none-access point stations, non-AP STAs). For ease of description, in this specification, the access point station (AP STA) is briefly referred to as an access point (AP), and the non-access point station (non-AP STA) is briefly referred to as a station (STA). FIG. 1 is described by using an example in which the wireless communication system includes one AP and six stations (STA 1, STA 2, STA 3, STA 4, STA 5 and STA 6). In actual application, the wireless communication system may include more or fewer APs and STAs. A quantity of APs and a quantity of STAs in the wireless communication system are not limited in this application.

In a possible implementation, the access point may be an access point for a terminal device (such as a mobile phone) to access a wired (or wireless) network, and is mainly deployed at home, in a building, and in a park. A typical coverage radius is tens of meters to hundreds of meters. Certainly, the access point may alternatively be deployed outdoors. The access point is equivalent to a bridge that connects a wired network and a wireless network. A main function of the access point is to connect various wireless network clients together and then connect the wireless network to the Ethernet. For example, the access point may be a terminal device (such as a mobile phone) with a wireless fidelity (wireless fidelity, Wi-Fi) chip or a network device (such as a communication entity like a communication server, a router, a switch, or a bridge).

The access point in this application may be a wireless communication device supporting AMP, for example, an HE AP, an EHT AP, or an access point applicable to a future-generation Wi-Fi standard that supports AMP. For example, the access point may support a plurality of WLAN standards of an 802.11 family, such as 802.11bn, 802.11be, 802.11bf, 802.11ax, 802.11ac, 802.11n, 802.11g, 802.11b, 802.11ad, 802.11ay, and 802.11a. For example, the access point may further support a UWB-related protocol or a sensing protocol.

In a possible implementation, the station may be a wireless communication chip, a wireless sensor, a wireless communication terminal, or the like, and may also be referred to as a user. For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, a computer supporting a Wi-Fi communication function, a tag supporting a Wi-Fi communication function, a sensor supporting a Wi-Fi communication function, or the like.

Alternatively, the station in this application may be a wireless communication device supporting AMP, for example, an HE STA, an EHT STA, or a station applicable to a future-generation Wi-Fi standard that supports AMP. For example, the station may support a plurality of WLAN standards of the 802.11 family, such as 802.11bn, 802.11be, 802.11bf, 802.11ax, 802.11ac, 802.11n, 802.11g, 802.11b, 802.11ad, 802.11ay, and 802.11a. For example, the station may further support a UWB-related protocol or a sensing protocol.

For example, an application scenario of AMP includes but is not limited to a smart home, a smart farm, a smart factory, logistics/warehousing, supermarket delivery, indoor positioning, a data center, and the like. With continuous popularization of AMP application scenarios, an AMP system may be applied to more scenarios or industries. For example, the AMP system is applied to an internet of things industry, an internet of vehicles industry, or a banking industry, or is applied to enterprise offices, stadiums and exhibition halls, concert halls, hotel rooms, dormitories, wards, classrooms, supermarkets, squares, streets, production workshops or warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in an internet of things, an entertainment terminal (for example, an augmented reality (augmented reality, AR) wearable device or a virtual reality (virtual reality, VR) wearable device), a smart device (for example, a printer, a projector, a loudspeaker, or a speaker) in a smart office, an internet of vehicles device in an internet of vehicles, an infrastructure in a daily life scenario (for example, a vending machine, a self-service navigation console in a supermarket, a self-service cashier device, or a self-service ordering machine), a device in a large sports and music, or the like.

Although embodiments of this application are mainly described by using a network in which IEEE 802.11 is deployed as an example, a person skilled in the art easily understands that aspects in this application may be extended to another network using various standards or protocols. For example, a personal area network (personal area network, PAN), Bluetooth (BLUETOOTH), a high performance radio LAN (high performance radio LAN, HIPERLAN) (a wireless standard similar to the IEEE 802.11 standard, mainly used in Europe), a wide area network (wide area network, WAN), or another network known or developed in the future. Therefore, regardless of used coverage and a used wireless access protocol, various aspects provided in this application are applicable to any appropriate wireless network.

Due to a device capability limitation and backward compatibility, a Wi-Fi system supporting AMP can reuse an existing Wi-Fi design to a maximum extent. In a possible implementation, an ambient power (ambient power, AMP) physical layer protocol data unit (physical layer protocol data unit, PPDU) may refer to a wake-up radio (wake-up radio, WUR) physical layer protocol data unit (PPDU), and on this basis, a low-power and low-complexity AMP PPDU is designed.

In this application, "AMP PPDU" may be understood as a PPDU sent or received by a wireless communication device supporting AMP (or referred to as an AMP device), or a PPDU defined in an AMP-related protocol.

In a possible implementation, FIG. 2 is a diagram of a frame format of a WUR PPDU according to an embodiment of this application. As shown in FIG. 2, a format of the WUR (802.11ba) PPDU includes but is not limited to a legacy short training field (legacy short training field, L-STF), a legacy long training field (legacy long training field, L-LTF), a legacy signal field (legacy signal field, L-SIG), a binary phase shift keying (binary phase shift keying, BPSK) mark 1 (BPSK-Mark1), a binary phase shift keying mark 2 (BPSK-Mark2), a WUR synchronization (WUR synchronization, WUR-Sync) field, and a WUR data (WUR-Data) field. (Transmission) bandwidths of the L-STF, the L-LTF, the L-SIG, the BPSK-Mark1, and the BPSK-Mark2 are 20 MHz, and (transmission) bandwidths of WUR-Sync and WUR-Data are 4 MHz. A duration of the L-STF and the L-LTF is 8 µs (microsecond), and a duration of the L-SIG, the BPSK-Mark1, and the BPSK-Mark2 is 4 µs. A sequence used by the WUR-Sync field (which may be briefly referred to as a WUR-Sync sequence) is obtained by repeating a sequence W, or by replacing an element 1 with an element 0 and replacing an element 0 with an element 1 in the sequence W. For example, the sequence W=[1 0 1 0 0 1 0 0 1 0 1 1 1 0 1 1 0 0 0 1 0 1 1 1 0 0 1 1 1 0 0 0].

For a WUR low data rate (WUR low data rate, WUR LDR), a rate of the WUR-Date field is 62.5 kbps (kilobits per second), a modulation scheme of the WUR-Date field is on-off keying (On-Off keying, OOK), that is, binary amplitude keying (binary amplitude keying) modulation, and a sequence used for the WUR-Sync field (namely, a WUR-Sync sequence) is obtained by repeating the sequence W twice. For a WUR high data rate (WUR high data rate, WUR HDR), a rate of the WUR-Date field is 250 kbps, a modulation scheme of the WUR-Date field is on-off keying (OOK) modulation, and a sequence used for the WUR-Sync field (namely, a WUR-Sync sequence) is *W* obtained by replacing an element 1 with an element 0 and replacing an element 0 with an element 1 in the sequence W, where *W* =[0 1 0 1 1 0 1 1 0 1 0 0 0 1 0 0 1 1 1 0 1 0 0 0 1 1 0 0 0 1 1 1].

It may be understood that the rate of the WUR-Date field or the modulation and coding scheme (modulation and coding scheme, MCS) of the WUR-Date field may be indirectly or implicitly indicated by the sequence used for the WUR-Sync field (namely, the WUR-Sync sequence). It may be further understood that the modulation and coding scheme (MCS) includes two parts: a rate (data rate) and a modulation (modulation) scheme. The rate (data rate) in this application may be a transmission rate of a digital signal, that is, a quantity of bits (bit) transmitted per second, and is measured in bit per second (bit per second, bps). It may be understood that a high rate (data rate) indicates a high data transmission speed.

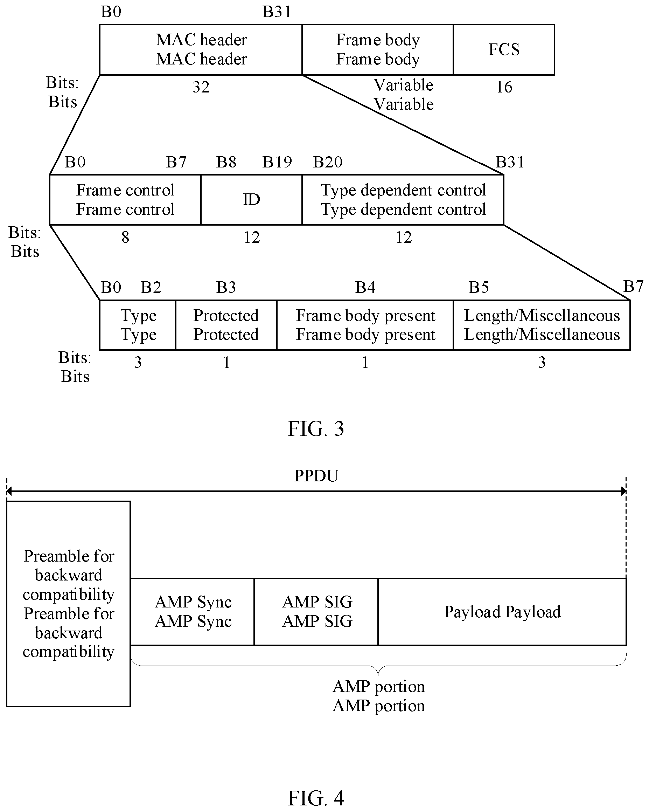

In a possible implementation, a frame format of the WUR-Data field is shown in FIG. 3. FIG. 3 is a diagram of a frame format of a WUR-Data field according to an embodiment of this application. As shown in FIG. 3, the WUR-Data field includes but is not limited to a medium access control (medium access control, MAC) header (MAC Header), a frame body (frame body), and a frame check sequence (frame check sequence, FCS). The MAC header includes frame control (Frame Control), an identifier (identifier, ID), and type dependent control (Type Dependent Control). The frame control includes content such as type (Type), protected (Protected), frame body present (Frame Body Present), and length/miscellaneous (Length/Miscellaneous). A value and a description (description) of the type (Type) herein are shown in the following Table 1. It may be understood that for values and meanings of other content in the WUR-Data field, refer to the conventional technology, for example, the 802.11ba standard. Details are not described herein.

**Table 1: Definition of a WUR frame type (WUR frame Type)**

| Type (Type) | Type description Type description |
|---|---|
| 0 | WUR Beacon (WUR beacon) |
| 1 | WUR Wake-up (WUR wake-up) |
| 2 | WUR Vendor Specific (WUR vendor specific) |
| 3 | WUR Discovery (WUR discovery) |
| 4 | WUR Short Wake-up (WUR short wake-up) |
| 5 to 7 | Reserved (Reserved) |

In a possible implementation, in consideration of requirements of low costs, low complexity, and low power consumption of the AMP device, the WUR PPDU may serve as a reference for designing the AMP PPDU. For example, a possible PPDU structure for AMP is shown in FIG. 4. FIG. 4 is a diagram of a possible frame format of an AMP PPDU according to an embodiment of this application. As shown in FIG. 4, the possible PPDU structure for AMP includes but is not limited to a preamble for backward compatibility (preamble for backward compatibility), an AMP synchronization (AMP synchronization, AMP Sync) field (AMP Sync field), an AMP signal field (AMP SIG field), and a payload (payload). The preamble for backward compatibility may be further understood as a legacy preamble (legacy preamble), or some legacy signal fields, or some legacy PPDU identifier fields, for example, may include any one or more of the following items: an L-STF, an L-LTF, an L-SIG, a BPSK Mark, and the like. The AMP synchronization field may include a determined sequence (for example, an AMP synchronization sequence or a preamble sequence). Details are not described again below. The AMP payload (payload) may be understood as an AMP data field (AMP data field). Alternatively, the AMP SIG field and the payload form an AMP data (AMP data) field, where the payload may be a frame body (frame body) in the AMP data field.

For example, a (transmission) bandwidth of the preamble for backward compatibility is 20 MHz, and a function of the preamble for backward compatibility is backward compatibility. (Transmission) bandwidths of the AMP preamble, the AMP header, and the payload are less than 20 MHz, for example, 4 MHz.

Currently, AMP devices may be classified into three types. (1) Type A: This type of AMP device may have the same functions as existing Wi-Fi devices, and this type of AMP device may further have a function of ambient power harvesting (that is, radio frequency energy is part of an energy source for this type of AMP device). For example, the type-A AMP device may be provided with a battery.

(2) Type B: This type of AMP device has a strong energy storage capability, and may support active transmission. The energy storage capability of this type of AMP device is less than an energy storage capability of a type-A AMP device, but is greater than an energy storage capability of a type-C AMP device.

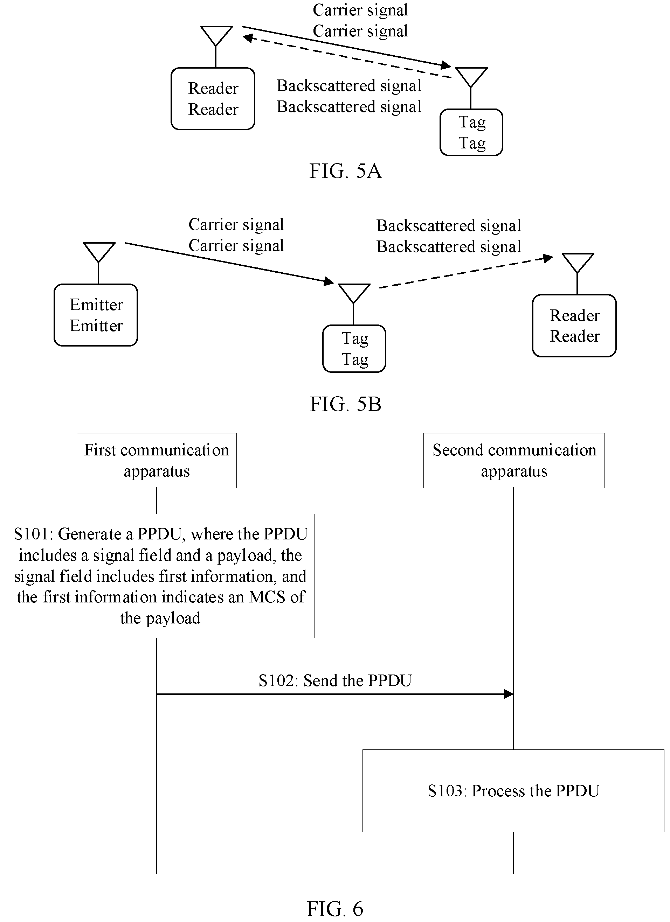

(3) Type C: This type of AMP device has a weak energy storage capability, and supports only backscatter (backscatter) communication (or referred to as backscatter communication). This type of AMP device may achieve an objective of communication by harvesting ambient power (for example, radio frequency energy). For example, the type-C AMP device may not support some existing Wi-Fi protocols such as IEEE 802.11b/g/n/ac/ax/be/bn and the like. For backscatter (backscatter) communication, there are two configurations: a monostatic mode and a bistatic mode. FIG. 5A and FIG. 5B are diagrams of two configurations of backscatter communication according to an embodiment of this application. As shown in FIG. 5A, in a monostatic mode, a reader (Reader) sends a carrier signal (carrier signal) to a tag (Tag), and the tag backscatters (backscatter) a signal to the reader. In the monostatic mode, communication from the reader to the tag is the downlink, and communication from the tag to the reader is the uplink. As shown in FIG. 5B, in a bistatic mode, an emitter (Emitter) sends a carrier signal (carrier signal) to a tag (Tag), and the tag backscatters (backscatter) a signal to a reader (Reader). In the bistatic mode, communication from the emitter to the tag is the downlink, and communication from the tag to the reader is the uplink. Herein, the reader may be understood as an AP, and the tag may be understood as an STA.

Under the condition of an 802.11n channel model D, maximum uplink and downlink transmission distances for the type-B AMP device and the type-C AMP device are shown in Table 2 below.

**Table 2**

| | | Type B | | Type C (bistatic) | |
|---|---|---|---|---|---|
| DL | Device antenna gain | 2 dBi | | 2 dBi | |
| | Minimum receive power of the device | -45 dBm | | -20 dBm | |
| | Frequency | 2.4 GHz | | 2.4 GHz | |
| | EIRP (effective isotropic radiated power, effective isotropic radiated power) of an AP | 27 dBm | 20 dBm | 27 dBm | 20 dBm |
| | Maximum distance between an AP and an STA | 17.8 m | 11.32 m | 2 m | 0.88 m |

| | | Type B | | Type C (bistatic) | |
|---|---|---|---|---|---|
| UL | Device/AP antenna gain | 0 dBi | | 0 dBi | |
| | AP receiver sensitivity | -95 dBm | | -95 dBm | |
| | Maximum transmit power of the device | -15 dBm | | -20 dBm | |
| | Backscatter communication loss of the device | / | | 5 dB | |
| | Maximum distance between an STA and an AP | 27 m | | 13.8 m | |

It may be learned from Table 2 that, for the type-B AMP device and the type-C AMP device, the maximum transmission distance of the uplink (uplink, UL) is far greater than the maximum transmission distance of the downlink (downlink, DL). In other words, for the type-B AMP device and the type-C AMP device, link budgets for the uplink and the downlink are unbalanced.

Therefore, given that uplink and downlink link budgets may be unbalanced for some AMP devices (for example, the type-B AMP device and the type-C AMP device) in a network, how to design a signal (SIG) field applicable to various types of AMP devices is an urgent problem to be explored.

In view of this, embodiments of this application provide a PPDU transmission method and apparatus, and a readable storage medium, which may be applied to the AMP field. To address the imbalance between the link budgets for the uplink and the downlink, a signal field is designed, so that the signal field is applicable to various AMP devices, thereby supporting uplink and downlink communication of the AMP device.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application are not intended to limit the protection scope of this application.

In a possible implementation, the communication apparatus in this application may be a wireless communication device supporting AMP (or referred to as an APM device), for example, the AP or the STA that supports AMP in FIG. 1, or the tag or the reader in FIG. 5A and FIG. 5B. In some embodiments, the communication apparatus in this application may alternatively be a multi-link device (multi-link device, MLD) supporting AMP or a station supporting AMP in a multi-link device (MLD). The multi-link device is a wireless communication device that supports parallel transmission on a plurality of links. Compared with a device that supports only single-link transmission, the multi-link device has higher transmission efficiency and a higher throughput. The multi-link device includes one or more affiliated stations STAs (affiliated STAs). The affiliated STA may be a logical station, or may be a physical station. One station may operate on one link, one frequency band, or one channel. The affiliated station may be an access point (AP) or a non-access point station (non-AP STA). A multi-link device whose affiliated station is an AP may be referred to as an AP MLD, and a multi-link device whose affiliated station is a non-AP STA may be referred to as a non-AP MLD.

For example, the communication apparatus in this application may support an AMP-related protocol in IEEE 802.11, and may further support another protocol of the IEEE 802.11 series, for example, a plurality of WLAN standards from the 802.11 family, such as 802.11bn, 802.11be, 802.11bf, 802.11ax, 802.11ac, 802.11n, 802.11g, 802.11b, 802.11ad, 802.11ay, and 802.11a. For example, the communication apparatus in this application may further support a UWB-related protocol or a sensing protocol. Examples are not enumerated herein.

FIG. 6 is a schematic flowchart of a PPDU transmission method according to an embodiment of this application. This method mainly describes a possible design of a payload MCS field in an AMP SIG field of an AMP PPDU. As shown in FIG. 6, the PPDU transmission method includes but is not limited to the following steps.

S101: A first communication apparatus generates a PPDU, where the PPDU includes a signal field and a payload, the signal field includes first information, and the first information indicates an MCS of the payload. The MCS of the payload is an MCS in an MCS parameter table, and an MCS corresponding to downlink transmission and an MCS corresponding to uplink transmission in the MCS parameter table are not completely the same. For example, for specific content of the MCS parameter table, refer to the following description.

S102: The first communication apparatus sends the PPDU.

Correspondingly, a second communication apparatus receives the PPDU.

S103: The second communication apparatus processes the PPDU. For example, the second communication apparatus receives and demodulates the payload of the PPDU based on the MCS of the payload that is indicated by the first information.

In a possible implementation, the PPDU may include the signal field (SIG field) and the payload (payload). The signal field may be used to assist a receive end in correctly demodulating data or the payload. For example, the PPDU may further include a synchronization field (Sync field), the synchronization field may be generated/determined based on a preamble (preamble) sequence or a synchronization sequence (Sync sequence), and the preamble sequence (or the synchronization field) may be used to perform PPDU detection and time synchronization. For example, the PPDU in this embodiment of this application may be an AMP PPDU. Correspondingly, the signal field in the PPDU may be an AMP signal field (AMP SIG field), and the synchronization field in the PPDU may be an AMP synchronization field (AMP Sync field). For example, a frame format of the PPDU in this embodiment of this application may be shown in FIG. 4. Certainly, the frame format of the PPDU may alternatively be in another form. This is not limited in embodiments of this application. For ease of differentiation, the following uses an AMP PPDU for description.

In a possible implementation, the AMP signal field (AMP SIG field) in the AMP PPDU may include one or more of the following: first information, second information, third information, a version number (Version Number) field, a DL/UL indication (DL/UL Indication) field, a transmission opportunity (transmission opportunity, TXOP) duration (TXOP Duration) field, or a cyclic redundancy check (cyclic redundancy check, CRC) field. The first information may indicate the MCS of the payload (payload). The first information may also be referred to as a payload modulation and coding scheme (payload MCS) field (or subfield). Certainly, the first information may have another name, for example, a data MCS field (or subfield) or an MCS field (or subfield). This is not limited in embodiments of this application. In a possible implementation, the MCS of the payload may alternatively be indirectly or implicitly indicated by the AMP Sync field (which may be generated/determined based on a preamble sequence or a synchronization sequence). For example, one preamble sequence/synchronization sequence corresponds to one MCS, and different preamble sequences/synchronization sequences may correspond to different MCSs. It may be understood that, when the MCS of the payload is indirectly or implicitly indicated by the AMP Sync field, the AMP signal field may not include the first information. This embodiment of this application mainly focuses on a case in which the AMP signal field includes the first information.

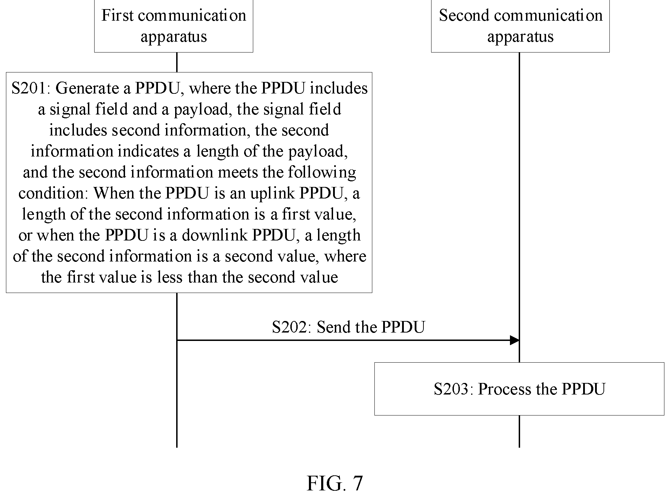

In a possible implementation, the second information may indicate a length of the payload (payload). The second information may also be referred to as a payload length (payload Length) field (or subfield). Certainly, the second information may have another name, for example, a length field (or subfield). This is not limited in embodiments of this application. A design of the second information may be related to the uplink and downlink. For a specific design of the second information, refer to the following description in the embodiment shown in FIG. 7. Details are not described herein.

In a possible implementation, the third information may indicate that the type of the PPDU is an AMP PPDU, that is, the PPDU is an AMP PPDU. The third information may also be referred to as an AMP PPDU indication (AMP PPDU Indication) field (or subfield). Certainly, the third information may have another name, for example, a type (Type) field (or subfield). This is not limited in embodiments of this application. It may be understood that, when the AMP synchronization field in this embodiment of this application is the same as a WUR synchronization field, the receive end (namely, the party receiving the PPDU) may not be able to distinguish between an AMP PPDU and a WUR PPDU. Therefore, in this embodiment of this application, the AMP signal field may carry the third information, and the third information may indicate the AMP PPDU, so that the receive end may distinguish between an AMP PPDU and a WUR PPDU. For example, a length of the third information may be 3 bits (3 bits). For example, in consideration of compatibility with the WUR type, the third information may continue to use a type (Type) field in the WUR. As shown in Table 1, a value of the third information (or the Type field) ranging from 0 to 4 indicates a WUR PPDU, and one or more values ranging from 5 to 7 indicate an AMP PPDU. Certainly, even if the AMP synchronization field is different from the WUR synchronization field, the AMP signal field may still include the third information. This is not limited in embodiments of this application. In a possible implementation, when the AMP synchronization field is different from the WUR synchronization field, and the AMP PPDU and the WUR PPDU may be distinguished by using a SYNC field, the AMP signal field may not include the third information.

In a possible implementation, the version number (Version Number) field in the AMP signal field may indicate a version number used by the AMP PPDU, and may serve for backward compatibility. It may be understood that when the version number used by the AMP PPDU is indirectly or implicitly indicated by the AMP Sync field, the AMP signal field may not include the version number field. The DL/UL indication field may indicate uplink (UL) transmission or downlink (DL) transmission, or indicate a DL/UL indication of the AMP PPDU. It may be understood that when the uplink (UL) transmission or the downlink (DL) transmission is indirectly indicated by the AMP synchronization field or the MCS, the AMP signal field may not include the DL/UL indication field. The TXOP duration field may indicate a channel occupancy time. The CRC field indicates a cyclic redundancy check code.

In a possible implementation, when the AMP synchronization field is the same as the WUR synchronization field, an MCS of the AMP signal field may be the same as an MCS of the WUR-Data field. To be specific, the MCS of the AMP signal field may be any one of the following: a rate of 62.5 kbps (kilobits per second) and OOK modulation, and a rate of 250 kbps and OOK modulation. For example, when the AMP synchronization field is the same as the WUR synchronization field in a WUR LDR mode, the MCS of the AMP signal field may be a rate of 62.5 kbps and OOK modulation; or when the AMP synchronization field is the same as the WUR synchronization field in a WUR HDR mode, the MCS of the AMP signal field may be a rate of 250 kbps and OOK modulation. In other words, the MCS of the AMP signal field may be implicitly or indirectly indicated by the AMP synchronization field.

In another possible implementation, when the AMP synchronization field is different from the WUR synchronization field, the MCS (or a transmission manner) of the AMP signal field is described in a subsequent embodiment. Details are not described herein.

In a possible implementation, in addition to downlink-related signaling, uplink-related signaling (such as a version number used for the uplink, an uplink payload MCS, an uplink TXOP duration, or an uplink payload length) may also be transmitted in a downlink AMP PPDU. The uplink-related signaling may be placed in (or after) a downlink signal field, or may be placed in a downlink payload. In other words, the downlink AMP PPDU may include both downlink-related signaling and uplink-related signaling. For example, in embodiments of this application, the downlink may be understood as from an AP to an STA, or from a reader to a tag, or from an emitter to a tag, or the like, and the uplink may be understood as from an STA to an AP, or from a tag to a reader. Certainly, the interpretation of the uplink and downlink may vary depending on the application scenario. Examples are not enumerated in embodiments of this application.

In a possible implementation, given that uplink and downlink link budgets are unbalanced for some AMP devices, the MCS of the payload in embodiments of this application may be related to the uplink and downlink. The MCS of the payload that is indicated by the first information may be an MCS in an MCS parameter (MCS parameter) table predefined in a standard. The MCS parameter table may include a plurality of MCSs, one MCS may correspond to one or more MCS indexes, and one MCS index (MCS index) identifies one MCS. Therefore, a value (which is a decimal value) of the first information (for example, the payload MCS field) may be an MCS index indicating the MCS of the payload. In some scenarios, the MCS parameter table is applicable to the MCS of the payload, and further applicable to a SIG of the AMP signal field. For specific descriptions, refer to descriptions in subsequent embodiments. Details are not described herein. The MCS corresponding to downlink transmission (DL) and the MCS corresponding to uplink transmission (UL) in the MCS parameter table are not completely the same. In embodiments of this application, "not completely the same" may include two meanings: "completely different (that is, there is no intersection between the two)" and "partially different".

The following describes content and a design idea of the MCS parameter table provided in this embodiment of this application by using an example.

The MCS includes content in two aspects: a rate (data rate) and a modulation (modulation) scheme. In a possible implementation, that the MCS corresponding to downlink transmission and the MCS corresponding to uplink transmission in the MCS parameter table are not completely the same includes: In the MCS parameter table, a maximum rate of the MCS corresponding to uplink transmission is greater than a maximum rate of the MCS corresponding to downlink transmission, and/or in the MCS parameter table, a minimum rate of the MCS corresponding to uplink transmission is greater than a minimum rate of the MCS corresponding to downlink transmission. That the MCS corresponding to downlink transmission and the MCS corresponding to uplink transmission in the MCS parameter table are not completely the same may further include: In the MCS parameter table, a modulation scheme of the MCS corresponding to downlink transmission is OOK modulation, and a modulation scheme of the MCS corresponding to uplink transmission includes one or more of the following: phase shift keying (phase shift keying, PSK) modulation, frequency-shift keying (Frequency-shift keying, FSK) modulation, OOK modulation, spread spectrum, or complementary code keying (complementary code keying, CCK) modulation. In other words, in the MCS parameter table, a modulation order of a modulation scheme corresponding to downlink transmission is less than or equal to a modulation order of a modulation scheme corresponding to uplink transmission.

Implementation 1: A same MCS parameter table is used for uplink transmission and downlink transmission, and an MCS index (index) corresponding to uplink transmission is different from or does not overlap an MCS index corresponding to downlink transmission. In this case, uplink transmission and downlink transmission may be distinguished by an MCS index. For example, for Implementation 1, the AMP signal field may not include the DL/UL indication field.

For example, the uplink and downlink share one MCS parameter table, and the MCS parameter table meets one or more of the following conditions: An MCS index is in a one-to-one correspondence with an MCS, the downlink (DL) adopts OOK modulation, and the uplink (UL) adopts PSK plus spread spectrum/CCK, and the minimum rate of the MCS corresponding to uplink transmission is greater than the maximum rate of the MCS corresponding to downlink transmission. For example, a possible MCS parameter table is shown in the following Table 3a.

**Table 3a**

| | MCS index | Meaning Meaning (that is, rate and modulation) |
|---|---|---|
| DL | 0 | 62.5 kbps, OOK modulated (OOK modulated) |
| | 1 | 125 kbps, OOK modulated |
| | 2 | 250 kbps, OOK modulated |
| UL | 3 | 500 kbps, BPSK (binary phase shift keying, binary phase shift keying) /DBPSK (differential binary phase shift keying, differential binary phase shift keying) + DSSS (direct sequence spread spectrum, direct sequence spread spectrum) + repetition (repetition) |
| | 4 | 1 Mbps, BPSK/DBPSK + DSSS |
| | 5 | 2 Mbps, QPSK (quadrature phase shift keying, quadrature phase shift keying)/DQPSK (differential quadrature phase shift keying, differential quadrature phase shift keying) + DSSS |
| | 6 | 5.5 Mbps, QPSK/DQPSK + CCK |
| | 7 | 11 Mbps, QPSK/DQPSK + CCK |

For another example, the uplink and downlink share one MCS parameter table, and the MCS parameter table meets one or more of the following conditions: An MCS index is in a one-to-one correspondence with an MCS, the downlink (DL) adopts OOK modulation, the uplink (UL) adopts FSK plus spread spectrum/CCK, and the minimum rate of the MCS corresponding to uplink transmission is greater than the maximum rate of the MCS corresponding to downlink transmission. For example, a possible MCS parameter table is shown in the following Table 3b.

**Table 3b**

| | MCS index | Meaning Meaning (that is, rate and modulation) |
|---|---|---|
| DL | 0 | 62.5 kbps, OOK modulated |
| | 1 | 125 kbps, OOK modulated |
| | 2 | 250 kbps, OOK modulated |
| UL | 3 | 500 kbps, 2FSK/MSK (minimum frequency shift keying, minimum frequency shift keying) + DSSS + repetition |
| | 4 | 1 Mbps, 2FSK/MSK + DSSS |
| | 5 | 2 Mbps, 4FSK + DSSS |
| | 6 | 5.5 Mbps, 4FSK + CCK |
| | 7 | 11 Mbps, 4FSK + CCK |

For another example, the uplink and downlink share one MCS parameter table, and the MCS parameter table meets one or more of the following conditions: One MCS index identifies one MCS, one MCS corresponds to one or more MCS indexes, the downlink (DL) adopts OOK modulation, the uplink (UL) adopts OOK modulation or PSK plus spread spectrum/CCK, and the maximum rate of the MCS corresponding to uplink transmission is greater than the maximum rate of the MCS corresponding to downlink transmission. In other words, the MCS corresponding to downlink transmission and the MCS corresponding to uplink transmission in the MCS parameter table are partially the same, but an index of the MCS corresponding to downlink transmission is different from an index of the MCS corresponding to uplink transmission. For example, a possible MCS parameter table is shown in the following Table 3c.

**Table 3c**

| | MCS index | Meaning Meaning (that is, rate and modulation) |
|---|---|---|
| | 0 | 62.5 kbps, OOK modulated |
| DL | 1 | 125 kbps, OOK modulated |
| | 2 | 250 kbps, OOK modulated |
| | 3 | 250 kbps, OOK modulated |
| | 4 | 1 Mbps, BPSK/DBPSK + DSSS |
| UL | 5 | 2 Mbps, QPSK/DQPSK + DSSS |
| | 6 | 5.5 Mbps, QPSK/DQPSK + CCK |
| | 7 | 11 Mbps, QPSK/DQPSK + CCK |

In a possible implementation, the MCS parameter table predefined in the standard may include one or more of Table 3a to Table 3c. As shown in Table 3a to Table 3c, the MCS index ranges from 0 to 7. Correspondingly, a length of the first information (for example, the payload MCS field) may be 3 bits. For example, in an AMP PPDU, the MCS of the payload that is indicated by the first information may be any MCS in Table 3a to Table 3c.

Generally, the AP has higher sensitivity as a receive end, and uplink transmission may support a higher MCS (for example, a higher rate or a higher modulation order). A higher MCS can shorten an uplink air interface occupancy time, thereby reducing interference to another device. Therefore, in this embodiment of this application, in consideration of the unbalanced uplink and downlink link budgets, MCSs that are not completely the same are designed for the uplink and downlink, to adapt to characteristics of uplink transmission and downlink transmission (for example, a maximum uplink transmission distance is greater than a maximum downlink transmission distance). For example, in this embodiment of this application, a higher MCS is designed for uplink transmission, so that an air interface occupancy time of uplink transmission can be reduced, thereby reducing interference to another device; and a lower MCS is designed for downlink transmission, so that reliability of downlink transmission can be improved.

Implementation 2: A same MCS parameter table is used for uplink transmission and downlink transmission, an MCS index is in a one-to-one correspondence with an MCS, and an MCS index corresponding to uplink transmission partially overlaps an MCS index corresponding to downlink transmission. In other words, the MCS corresponding to downlink transmission (DL) and the MCS corresponding to uplink transmission (UL) are partially the same, and the index of the MCS corresponding to downlink transmission and the index of the MCS corresponding to uplink transmission are also partially the same. In this case, uplink transmission and downlink transmission may not be distinguished by an MCS index. Therefore, additional information may be further required to indicate uplink transmission and downlink transmission. For example, for Implementation 2, the AMP signal field may include the DL/UL indication field.

In some scenarios, given that the downlink AMP PPDU may carry both downlink-related signaling (for example, a downlink payload MCS) and uplink-related signaling (for example, an uplink payload MCS), the AMP signal field of the downlink AMP PPDU may include the DL/UL indication. For an uplink AMP PPDU, an AMP signal field may not include the DL/UL indication. In other words, content of the AMP signal field in the uplink AMP PPDU may be different from content of the AMP signal field in the downlink AMP PPDU. Certainly, for the uplink AMP PPDU, the AMP signal field may alternatively include the DL/UL indication field.

For example, the uplink and downlink share one MCS parameter table, and the MCS parameter table meets one or more of the following conditions: an MCS index is in a one-to-one correspondence with an MCS, the MCS corresponding to downlink transmission and the MCS corresponding to uplink transmission are partially the same, the downlink (DL) adopts OOK modulation, the uplink (UL) adopts OOK modulation or PSK plus spread spectrum/CCK, and the maximum rate of the MCS corresponding to uplink transmission is greater than the maximum rate of the MCS corresponding to downlink transmission. For example, a possible MCS parameter table is shown in the following Table 4a.

**Table 4a**

| | | MCS index | Meaning Meaning (that is, rate and modulation) |
|---|---|---|---|
| | DL | 0 | 62.5 kbps, OOK modulated |
| | | 1 | 125 kbps, OOK modulated |
| UL | | 2 | 250 kbps, OOK modulated |
| | | 3 | 500 kbps, OOK modulated |
| | | 4 | 1 Mbps, BPSK/DBPSK + DSSS |
| | | 5 | 2 Mbps, QPSK/DQPSK + DSSS |
| | | 6 | 5.5 Mbps, QPSK/DQPSK + CCK |
| | | 7 | 11 Mbps, QPSK/DQPSK + CCK |

For another example, the uplink and downlink share one MCS parameter table, and the MCS parameter table meets one or more of the following conditions: An MCS index is in a one-to-one correspondence with an MCS, the MCS corresponding to downlink transmission the MCS corresponding to uplink transmission are partially the same, the downlink (DL) adopts OOK modulation, the uplink (UL) adopts OOK modulation or FSK plus spread spectrum/CCK, and the maximum rate of the MCS corresponding to uplink transmission is greater than the maximum rate of the MCS corresponding to downlink transmission. For example, a possible MCS parameter table is shown in the following Table 4b.

**Table 4b**

| | | MCS index | Meaning Meaning (that is, rate and modulation) |
|---|---|---|---|
| | DL | 0 | 62.5 kbps, OOK modulated |
| | | 1 | 125 kbps, OOK modulated |
| UL | | 2 | 250 kbps, OOK modulated |
| | | 3 | 500 kbps, OOK modulated |
| | | 4 | 1 Mbps, 2FSK/MSK + DSSS |
| | | 5 | 2 Mbps, 4FSK + DSSS |
| | | 6 | 5.5 Mbps, 4FSK + CCK |
| | | 7 | 11 Mbps, 4FSK + CCK |

In a possible implementation, the MCS parameter table predefined in the standard may include one or more of Table 4a and/or Table 4b. As shown in Table 4a and Table 4b, the MCS index ranges from 0 to 7. Correspondingly, a length of the first information (for example, the payload MCS field) may be 3 bits. For example, in an AMP PPDU, the MCS of the payload that is indicated by the first information may be any MCS in Table 4a or Table 4b.

In this embodiment of this application, in consideration of the unbalanced uplink and downlink link budgets, MCSs that are not completely the same are designed for the uplink and downlink, to adapt to characteristics of uplink transmission and downlink transmission (for example, a maximum uplink transmission distance is greater than a maximum downlink transmission distance). For example, in this embodiment of this application, a higher MCS is designed for uplink transmission, so that an air interface occupancy time of uplink transmission can be reduced, thereby reducing interference to another device; and a lower MCS is designed for downlink transmission, so that reliability of downlink transmission can be improved.

Implementation 3: The uplink and downlink use separate MCS parameter tables, for example, a downlink MCS parameter table and an uplink MCS parameter table; and in each MCS parameter table, an MCS index is in a one-to-one correspondence with an MCS. In this case, the AMP signal field may include the DL/UL indication field. For example, when the DL/UL indication field indicates downlink transmission, the MCS of the payload that is indicated by the first information is an MCS in a downlink MCS parameter table predefined in a standard. When the DL/UL indication field indicates uplink transmission, the MCS of the payload that is indicated by the first information is an MCS in an uplink MCS parameter table predefined in a standard. In other words, the standard may separately define MCS parameter tables for uplink transmission and downlink transmission, but the following condition may be met: An MCS corresponding to downlink transmission (DL) in the downlink MCS parameter table and an MCS corresponding to uplink transmission (UL) in the uplink MCS parameter table are not completely the same.

For example, OOK modulation is adopted for downlink transmission, and a possible MCS parameter table is shown in the following Table 5a.

**Table 5a**

| | MCS index | Meaning Meaning (that is, rate and modulation) |
|---|---|---|
| | 0 | 62.5 kbps, OOK modulated |
| DL | 1 | 125 kbps, OOK modulated |
| | 2 | 250 kbps, OOK modulated |
| | 3 | 500 kbps, OOK modulated |

For example, PSK plus spread spectrum/CCK are adopted for uplink transmission, and a possible MCS parameter table is shown in the following Table 5b.

**Table 5b**

| | MCS index | Meaning Meaning (that is, rate and modulation) |
|---|---|---|
| | 0 | 1 Mbps, BPSK/QBPSK + DSSS |
| UL | 1 | 2 Mbps, QPSK/DQPSK + DSSS |
| | 2 | 5.5 Mbps, QPSK/DQPSK + CCK |
| | 3 | 11 Mbps, QPSK/DQPSK + CCK |

For example, FSK plus spread spectrum/CCK are adopted for uplink transmission, and a possible MCS parameter table is shown in the following Table 5c.

**Table 5c**

| | MCS index | Meaning Meaning (that is, rate and modulation) |
|---|---|---|
| | 0 | 1 Mbps, 2FSK/MSK + DSSS |
| UL | 1 | 2 Mbps, 4FSK + DSSS |
| | 2 | 5.5 Mbps, 4FSK + CCK |
| | 3 | 11 Mbps, 4FSK + CCK |

In a possible implementation, the downlink MCS parameter table predefined in the standard may include one or more of Table 5a. The uplink MCS parameter table predefined in the standard may include one or more of Table 5b and/or Table 5c. As shown in Table 5a to Table 5c, the MCS index ranges from 0 to 3. Correspondingly, a length of the first information (for example, the payload MCS field) may be 2 bits. For example, in a downlink AMP PPDU, the MCS of the payload that is indicated by the first information may be any MCS in Table 5a; and in an uplink AMP PPDU, the MCS of the payload that is indicated by the first information may be any MCS in Table 5b or Table 5c.

In this embodiment of this application, in consideration of the unbalanced uplink and downlink link budgets, MCSs that are not completely the same are designed for the uplink and downlink, to adapt to characteristics of uplink transmission and downlink transmission (for example, an uplink transmission distance is long, and a downlink transmission distance is short). For example, in this embodiment of this application, a higher MCS is designed for uplink transmission, so that an air interface occupancy time of uplink transmission can be reduced, thereby reducing interference to another device; and a lower MCS is designed for downlink transmission, so that reliability of downlink transmission can be improved. In addition, in this embodiment of this application, the MCS parameter table is separately designed for uplink transmission and downlink transmission, so that bit overheads of the first information (for example, the payload MCS field) or the AMP signal field can be reduced.

In a possible implementation, a first communication apparatus (for example, an AP or an STA) generates and sends an AMP PPDU. The AMP PPDU may be an uplink PPDU or a downlink PPDU. This is not limited in embodiments of this application. The AMP PPDU includes but is not limited to an AMP signal field and a payload. The AMP signal field may include first information, and the first information may indicate an MCS of the payload. The MCS of the payload may be an MCS in a predefined MCS parameter table. The MCS parameter table may include one or more of Table 3a to Table 5c. A second communication apparatus (for example, an STA or an AP) receives and processes the AMP PPDU. For example, the second communication apparatus may receive and demodulate the payload of the AMP PPDU based on the MCS of the payload that is indicated by the first information.

In this embodiment of this application, in consideration of the unbalanced uplink and downlink link budgets, MCS parameters that are not completely the same are designed for an uplink payload and a downlink payload, to adapt to characteristics of uplink transmission and downlink transmission, and support uplink and downlink communication of an AMP device. For example, in this embodiment of this application, an MCS with a higher rate and/or a higher modulation order is designed for the uplink payload, so that an air interface occupancy time of the uplink payload can be reduced, thereby reducing interference to another device; and an MCS with a lower rate and/or a lower modulation order is designed for the downlink payload, so that reliability of the downlink payload can be improved.

FIG. 7 is another schematic flowchart of a PPDU transmission method according to an embodiment of this application. The method mainly describes a design of a payload length (payload Length) field in an AMP SIG field of an AMP PPDU. In a possible implementation, the method may be implemented in combination with the embodiment shown in FIG. 6, or may be independently implemented. This is not limited in embodiments of this application.

As shown in FIG. 7, the PPDU transmission method includes but is not limited to the following steps.

S201: A first communication apparatus generates a PPDU, where the PPDU includes a signal field and a payload, the signal field includes second information, the second information indicates a length of the payload, and the second information meets the following condition: When the PPDU is an uplink PPDU, a length of the second information is a first value, or when the PPDU is a downlink PPDU, a length of the second information is a second value, where the first value is less than the second value.

S202: The first communication apparatus sends the PPDU.

Correspondingly, a second communication apparatus receives the PPDU.

S203: The second communication apparatus processes the PPDU.

In a possible implementation, the PPDU may include the signal field (SIG field) and the payload (payload). The signal field may be used to assist a receive end in correctly demodulating data or the payload. For example, the PPDU may further include a synchronization field (Sync field), the synchronization field may be generated/determined based on a preamble (preamble) sequence or a synchronization sequence (Sync sequence), and the preamble sequence (or the synchronization field) may be used to perform PPDU detection and time synchronization. For example, the PPDU in this embodiment of this application may be an AMP PPDU. Correspondingly, the signal field in the PPDU may be an AMP signal field (AMP SIG field), and the synchronization field in the PPDU may be an AMP synchronization field (AMP Sync field). For example, a frame format of the PPDU in this embodiment of this application may be shown in FIG. 4. Certainly, the frame format of the PPDU may alternatively be in another form. This is not limited in embodiments of this application. For ease of differentiation, an AMP PPDU is used for description in this embodiment of this application.

In a possible implementation, the AMP signal field (AMP SIG field) may include the second information, and the second information may indicate the length of the payload (payload). The second information may also be referred to as a payload length (payload Length) field (or subfield). Certainly, the second information may have another name, for example, a length field (or subfield). This is not limited in embodiments of this application. For example, the AMP signal field may further include one or more of the following: first information, third information, a version number (Version Number) field, a DL/UL indication (DL/UL Indication) field, a transmission opportunity duration (TXOP Duration) field, or a cyclic redundancy check (CRC) field. For descriptions of the first information, the third information, the version number field, the DL/UL indication field, the TXOP duration field, and the CRC field, refer to related descriptions in the embodiment shown in FIG. 6. Details are not described herein again.

In a possible implementation, a design of the second information may be related to the uplink and downlink. It may be understood that, in application of AMP, the downlink is mainly used to transmit control information, scheduling information, wake-up information, and the like. The uplink is mainly used for ID (identifier) reporting, sensor data collection, positioning information exchange, and the like. According to the electronic product code (electronic product code, EPC) tag data standard, an ID of each device may range from 96 bits to 496 bits, and generally 96-bit IDs are used for internal logistics. Positioning information of each device uses 128 bits, 224 bits, or 256 bits. Temperature and human body sensor data usually use 96 bits. Alarm information usually uses 8 bits.

Therefore, in consideration of a difference in content between an uplink payload and a downlink payload, in this embodiment of this application, second information (for example, a payload length field) may be separately designed for an uplink AMP signal field and a downlink AMP signal field. In a possible implementation, a length of the second information in an uplink AMP PPDU is less than the length of the second information in a downlink AMP PPDU. In other words, the second information meets the following condition: When the AMP PPDU is an uplink PPDU, a length of the second information is a first value, or when the AMP PPDU is a downlink PPDU, a length of the second information is a second value, where the first value is less than the second value. It may be understood that, for ease of differentiation, the second information in the uplink AMP PPDU may be referred to as a UL payload length field (or subfield), and certainly may have another name. This is not limited in embodiments of this application. The second information in the downlink AMP PPDU may be referred to as a DL payload length field (or subfield), and certainly may have another name. This is not limited in embodiments of this application.

In a possible implementation, the length of the payload that is indicated by the second information is related to a value (for example, a decimal value) of the second information. For example, the length of the payload meets the following condition: When the AMP PPDU is an uplink PPDU, the length of the payload is equal to a product of a value of the second information (for example, a UL payload length field) and K1, or when the AMP PPDU is a downlink PPDU, the length of the payload is equal to a product of a value of the second information (for example, a DL payload length field) and K2, where K1 is greater than K2, K1 and K2 are both positive integers, and K1 and K2 may be predefined values. In other words, a granularity indicated by the payload length field of the uplink AMP PPDU is different from a granularity indicated by the payload length field of the downlink AMP PPDU. Generally, the uplink granularity is greater than the downlink granularity.

For example, the payload length field of the downlink AMP PPDU may represent consecutive values (that is, K2 is equal to 1), with the unit being bytes. For example, the length of the DL payload length field is 12 bits (which may represent 2¹²=4096 values in total). When the length of the payload is 768 bytes, the binary value (the leftmost bit of the binary is a most significant bit (most significant bit, MSB)) of the DL payload length field may be represented as 0011 0000 0000 (768 in decimal). The payload length field of the uplink AMP PPDU may indicate discrete values (that is, K1 is greater than or equal to 2), with the unit being K1 bytes. For example, the length of the UL payload length field is 8 bits, and it is assumed that K1 is equal to 16. When the length of the payload is 768 bytes, the binary value (the leftmost is the MSB) of the UL payload length field may be represented as 0011 0000 (48 in decimal, 48×16=768).

For another example, both the payload length field in the uplink AMP PPDU and the payload length field in the downlink AMP PPDU represent discrete values. For example, for the uplink, the unit is 4 bytes, that is, K1 is equal to 4; and for the downlink, the unit is 2 bytes, that is, K2 is equal to 2. Assuming that the length of the UL payload length field is 8 bits, the maximum length of the uplink payload is 1020 ((2⁸-1) ×4=1020) bytes. Assuming that the length of the DL payload length field is 9 bits, the maximum length of the downlink payload is 1022 ((2⁹-1) ×2=1022) bytes.

It may be learned that, in this embodiment of this application, signaling overheads of the uplink payload length field can be reduced.

In a possible implementation, when the AMP PPDU is an uplink PPDU, the length of the payload may be in a one-to-one correspondence with a value of the second information (for example, a UL payload length field). For example, a plurality of length values are defined based on content (such as an ID, positioning information, temperature, and human body detection data) of the uplink payload, and one length value corresponds to one value of the UL payload length field. For example, the length of the uplink payload includes but is not limited to: 8 bits, 96 bits, 128 bits, 224 bits, and 256 bits. The length of the UL payload length field may be 3 bits. When a value of the UL payload length field (3 bits) ranges from 0 to 4, it indicates that the length of the payload is equal to 8 bits (or 1 byte), 96 bits (or 12 bytes), 128 bits (16 bytes), 224 bits (or 28 bytes), or 256 bits (or 32 bytes). Values ranging from 5 to 7 of the UL payload length field (3 bits) are reserved. When the AMP PPDU is a downlink PPDU, the length of the payload is equal to a product of a value of the second information (for example, a DL payload length field) and K2, where K2 is a positive integer. It may be understood that when K2 is equal to 1, the length of the payload in the downlink PPDU is equal to a decimal value of the second information (for example, a DL payload length field).

In a possible implementation, because the second information has different lengths in the uplink PPDU and the downlink PPDU, the uplink AMP signal field and the downlink AMP signal field may also have different quantities of bits. In other words, frame structures of the uplink AMP signal field and the downlink AMP signal field may be different. In other words, frame structures of the uplink AMP PPDU and the downlink AMP PPDU may be different.

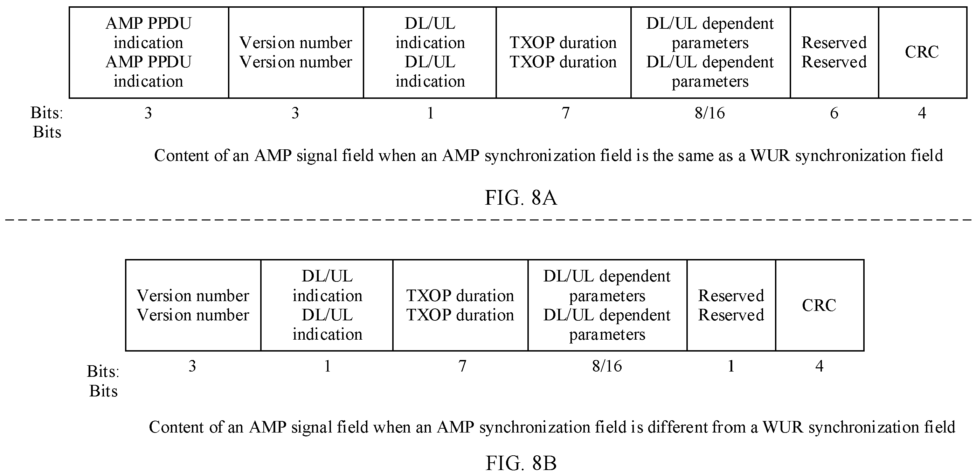

For example, FIG. 8A and FIG. 8B are diagrams of a frame format of an AMP signal field according to an embodiment of this application. As shown in FIG. 8A and FIG. 8B, the AMP signal field may include but is not limited to a DL/UL dependent parameters (DL/UL Dependent Parameters) field. For example, the AMP signal field may further include one or more of the following: an AMP PPDU indication field (that is, third information), a version number (Version Number) field, a DL/UL indication (DL/UL Indication), a TXOP duration (TXOP Duration) field, and a CRC field. In some scenarios, when an AMP synchronization field is different from a WUR synchronization field, the AMP signal field may not include an AMP PPDU indication field (as shown in FIG. 8B). When the AMP synchronization field is the same as the WUR synchronization field, the AMP signal field includes an AMP PPDU indication field (as shown in FIG. 8A). For descriptions of the AMP PPDU indication field (that is, the third information), the version number field, the DL/UL indication field, the TXOP duration field, and the CRC, refer to the foregoing descriptions. Details are not described herein again.

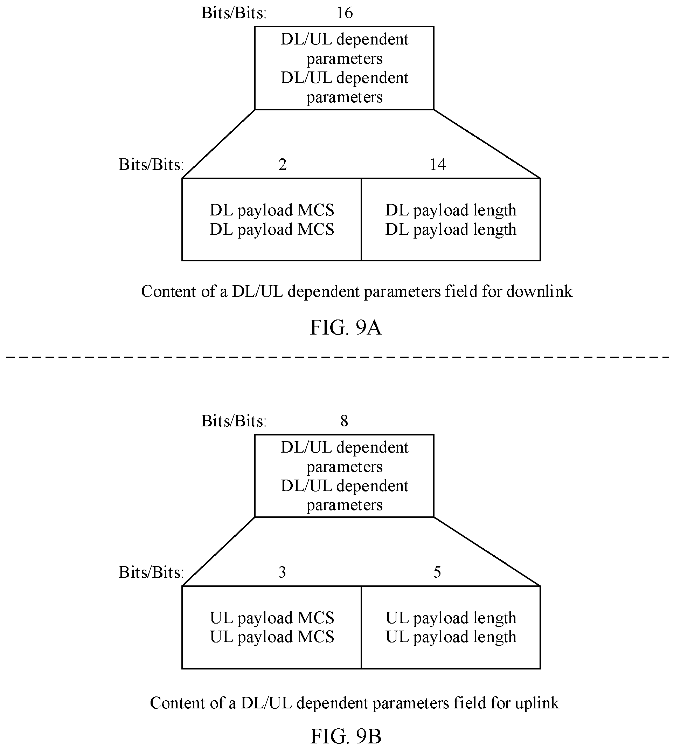

For example, as shown in FIG. 8A and FIG. 8B, a length of the DL/UL dependent parameters (DL/UL Dependent Parameters) field may be 8 bits or 16 bits. During downlink transmission, the DL/UL dependent parameters field may use a large quantity of bits, for example, 16 bits; and during uplink transmission, the DL/UL dependent parameters field may use a small quantity of bits, for example, 8 bits. FIG. 9A and FIG. 9B are diagrams of a frame format of a DL/UL dependent parameters field according to an embodiment of this application. As shown in FIG. 9A, the DL/UL dependent parameters field has a length of 16 bits for the downlink, and may include a DL payload MCS field (that is, the first information) and a DL payload length field (that is, the second information), where a length of the DL payload MCS field (that is, the first information) may be 2 bits, and a length of the DL payload length field (that is, the second information) may be 14 bits. As shown in FIG. 9B, the DL/UL dependent parameters field has a length of 8 bits for the uplink, and may include a UL payload MCS field (that is, the first information) and a UL payload length field (that is, the second information), where a length of the UL payload MCS field (that is, the first information) may be 3 bits, and a length of the UL payload length field (that is, the second information) may be 5 bits. For descriptions of the DL/UL payload MCS field (that is, the first information) and the UL payload length field (that is, the second information), refer to the foregoing descriptions. Details are not described herein again.

It may be understood that names, lengths, and arrangement orders of the fields in the AMP signal field shown in FIG. 8A and FIG. 8B are merely examples. This is not limited in embodiments of this application. Names, lengths, and arrangement orders of the fields in the DL/UL dependent parameters field shown in FIG. 9A and FIG. 9B are merely examples. This is not limited in embodiments of this application.

In a possible implementation, when the AMP synchronization field is the same as the WUR synchronization field, an MCS of the AMP signal field may be the same as an MCS of the WUR-Data field. To be specific, the MCS of the AMP signal field may be any one of the following: a rate of 62.5 kbps (kilobits per second) and OOK modulation, and a rate of 250 kbps and OOK modulation. For example, when the AMP synchronization field is the same as the WUR synchronization field in a WUR LDR mode, the MCS of the AMP signal field may be a rate of 62.5 kbps and OOK modulation; or when the AMP synchronization field is the same as the WUR synchronization field in a WUR HDR mode, the MCS of the AMP signal field may be a rate of 250 kbps and OOK modulation. In other words, the MCS of the AMP signal field may be implicitly or indirectly indicated by the AMP synchronization field.

In another possible implementation, when the AMP synchronization field is different from the WUR synchronization field, the MCS (or a transmission manner) of the AMP signal field is described in a subsequent embodiment. Details are not described herein.

In a possible implementation, in addition to downlink-related signaling, uplink-related signaling (such as a version number used for the uplink, an uplink payload MCS, an uplink TXOP duration, or an uplink payload length) may also be transmitted in a downlink AMP PPDU. The uplink-related signaling may be placed in (or after) a downlink signal field, or may be placed in a downlink payload. In other words, the downlink AMP PPDU may include both downlink-related signaling and uplink-related signaling. For example, in embodiments of this application, the downlink may be understood as from an AP to an STA, or from a reader to a tag, or from an emitter to a tag, or the like, and the uplink may be understood as from an STA to an AP, or from a tag to a reader. Certainly, the interpretation of the uplink and downlink may vary depending on the application scenario. Examples are not enumerated in embodiments of this application.

In a possible implementation, a first communication apparatus (for example, an AP or an STA) generates and sends an AMP PPDU. The AMP PPDU may be an uplink PPDU or a downlink PPDU. This is not limited in embodiments of this application. The AMP PPDU includes but is not limited to an AMP signal field and a payload. The AMP signal field may include second information, and the second information may indicate a length of the payload. For a description of the second information, refer to the foregoing description. Details are not described herein again. A second communication apparatus (for example, an STA or an AP) receives and processes the AMP PPDU. For example, the second communication apparatus may receive and demodulate the payload of the AMP PPDU based on the length of the payload that is indicated by the second information.

In embodiments of this application, a length of the uplink payload length field is designed to be less than a length of the downlink payload length field, and a granularity of a length indicated by the uplink payload length field is greater than a granularity of a length indicated by the downlink payload length field, so that signaling overheads of the uplink payload length field can be reduced.

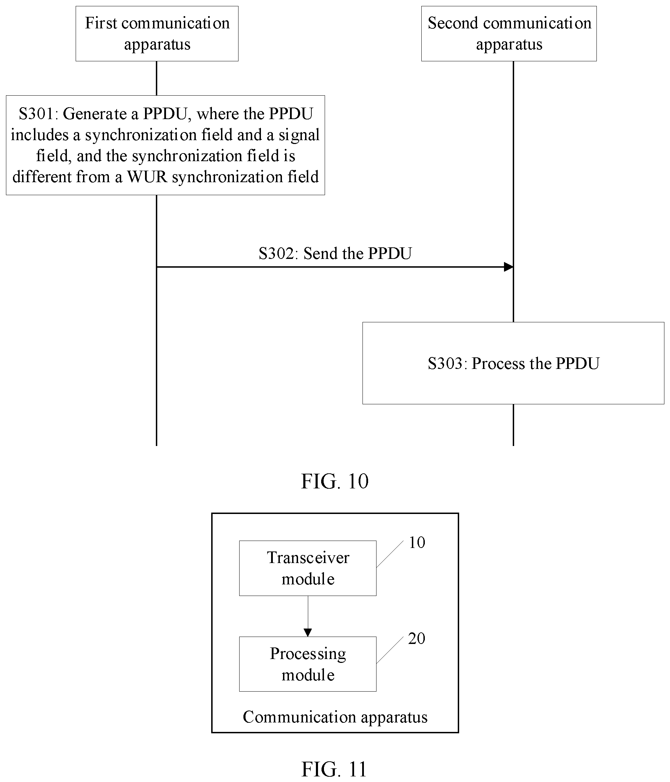

FIG. 10 is still another schematic flowchart of a PPDU transmission method according to an embodiment of this application. The method mainly describes a transmission manner (or an MCS) of an AMP SIG field in an AMP PPDU. In a possible implementation, the method may be implemented in combination with embodiments shown in FIG. 6 and/or FIG. 7. For details, refer to the following descriptions. Certainly, the method may alternatively be independently implemented. This is not limited in embodiments of this application.

As shown in FIG. 10, the PPDU transmission method includes but is not limited to the following steps.

S301: A first communication apparatus generates a PPDU, where the PPDU includes a synchronization field and a signal field, and the synchronization field is different from a WUR synchronization field.

S302: The first communication apparatus sends the PPDU.

Correspondingly, a second communication apparatus receives the PPDU.

S303: The second communication apparatus processes the PPDU.

In a possible implementation, the PPDU may include a synchronization field (Sync field) and a signal field (SIG field), the synchronization field may be generated/determined based on a preamble (preamble) sequence or a synchronization sequence (Sync sequence), and the preamble sequence (or the synchronization field) may be used to perform PPDU detection and time synchronization. The signal field may be used to assist a receive end in correctly demodulating data or a payload. For example, the PPDU in this embodiment of this application may be an AMP PPDU. Correspondingly, the signal field in the PPDU may be an AMP signal field (AMP SIG field), and the synchronization field in the PPDU may be an AMP synchronization field (AMP Sync field). For example, a frame format of the PPDU in this embodiment of this application may be shown in FIG. 4. Certainly, the frame format of the PPDU may alternatively be in another form. This is not limited in embodiments of this application. For ease of differentiation, an AMP PPDU is used for description in this embodiment of this application.

In a possible implementation, the AMP signal field (AMP SIG field) may include one or more of the following: first information, second information, third information, a version number (Version Number) field, a DL/UL indication (DL/UL Indication) field, a transmission opportunity duration (TXOP Duration) field, or a cyclic redundancy check (CRC) field. For descriptions of the first information, the second information, the third information, the version number field, the DL/UL indication field, the TXOP duration field, and the CRC field, refer to the related descriptions in embodiments shown in FIG. 6 and/or FIG. 7. Details are not described herein again.

In a possible implementation, the AMP synchronization field may be the same as or different from the WUR synchronization field. This embodiment of this application mainly focuses on impact on the transmission manner (or the MCS) of the AMP signal field when the AMP synchronization field is different from the WUR synchronization field. When the AMP synchronization field is the same as the WUR synchronization field, the transmission manner (or the MCS) of the AMP signal field is described in the embodiment shown in FIG. 6. Details are not described herein again. For example, when the AMP synchronization field is different from the WUR synchronization field, the AMP synchronization field may indirectly or implicitly indicate some content, for example, a DL/UL indication of the PPDU, an MCS of the AMP signal field, a version number, or an MCS of a payload in the PPDU. Certainly, even if the AMP synchronization field is different from the WUR synchronization field, the AMP synchronization field may not indicate any content. Herein, that the AMP synchronization field does not indicate any content may be understood as meaning that the AMP synchronization field does not indicate any other meaning except an original meaning of the AMP synchronization field. For example, the AMP synchronization field is used only for PPDU detection and time synchronization, and is generated/determined based on a preamble sequence or a synchronization sequence.

The following discusses the transmission manner (or the MCS) of the AMP signal field in different cases when the AMP synchronization field is different from the WUR synchronization field.

Case 1 (Case 1): The AMP synchronization field does not indicate any content. In this case, there are two transmission manners for the AMP signal field.

Solution 1: The AMP signal field is transmitted with a predefined MCS, or in other words, an MCS of the AMP signal field is predefined. For example, the AMP signal field is transmitted at a rate of 62.5 kbps and OOK modulation. For example, for uplink transmission and downlink transmission, the AMP signal field may alternatively be transmitted with different predefined MCSs. For example, during uplink transmission, the AMP signal field is transmitted with a minimum uplink MCS, such as at a rate of 62.5 kbps and OOK modulation; and during downlink transmission, the AMP signal field is transmitted with a minimum downlink MCS, such as at a rate of 250 kbps and OOK modulation.

Solution 2: The AMP signal field may be divided into a first signal subfield (denoted as SIG1) and a second signal subfield (denoted as SIG2). The SIG1 may be transmitted with a predefined MCS, so that reliability of the SIG1 is higher than reliability of the SIG2 and reliability of the payload. In other words, an MCS of the SIG1 is lower than an MCS of the SIG2 and an MCS of the payload, that is, a rate of the SIG1 is lower than a rate of the SIG2 and a rate of the payload, and/or a modulation order of a modulation scheme of the SIG1 is lower than a modulation order of a modulation scheme of the SIG2 and a modulation order of a modulation scheme of the payload. The SIG1 may indicate the MCS of the SIG2 and/or the MCS of the payload. It may be understood that, when the SIG1 indicates the MCS of the SIG2, the MCS of the payload may be adaptively adjusted based on the MCS of the SIG2, or the MCS of the payload may be determined based on the MCS of the SIG2, or the MCS of the payload is related to the MCS of SIG2. Similarly, when the SIG1 indicates the MCS of the payload (for example, the SIG1 includes the foregoing first information), the MCS of the SIG2 may be adaptively adjusted based on the MCS of the payload, or the MCS of the SIG2 may be determined based on the MCS of the payload, or the MCS of the SIG2 is related to the MCS of the payload. For example, the MCS of the SIG2 is lower than the MCS of the payload (for example, a rate of the SIG2 is lower than a rate of the payload, and/or a modulation order of the SIG2 is lower than a modulation order of the payload), so that reliability of the SIG2 is higher than that of the payload.

In a possible implementation, for Case 1, when this embodiment of this application is implemented in combination with the embodiment shown in FIG. 6, the AMP signal field includes first information, and the first information may indicate an MCS of the payload, and the MCS of the payload is an MCS in an MCS parameter table. For a description of the MCS parameter table, refer to the description of the embodiment shown in FIG. 6. For example, the MCS parameter table may include one or more of the foregoing Table 3a to Table 5c. Details are not described herein again.

Case 2 (Case 2): The AMP synchronization field indirectly or implicitly indicates an MCS of the AMP signal field. In this case, the AMP signal field is transmitted according to an MCS specified by the AMP synchronization field. For example, the MCS of the AMP signal field may be an MCS in an MCS parameter table, and an MCS corresponding to downlink transmission and an MCS corresponding to uplink transmission in the MCS parameter table are not completely the same. For a description of the MCS parameter table, refer to the description of the embodiment shown in FIG. 6. Details are not described herein again. For example, the MCS parameter table may include one or more of the foregoing Table 3a to Table 5c.

In a possible implementation, for Case 2, when this embodiment of this application is implemented in combination with the embodiment shown in FIG. 6, the AMP signal field includes first information, and the first information may indicate an MCS of the payload, and the MCS of the payload is an MCS in an MCS parameter table. The MCS parameter table may include one or more of the foregoing Table 3a to Table 5c. Details are not described herein again. Generally, to correctly demodulate data, the MCS of the AMP signal field is lower than the MCS of the payload (for example, a rate of the AMP signal field is lower than a rate of the payload, and/or a modulation order of a modulation scheme of the AMP signal field is lower than a modulation order of a modulation scheme of the payload), so that reliability of the AMP signal field is higher than that of the payload.

Case 3 (Case 3): The AMP synchronization field indirectly or implicitly indicates an MCS of the payload. In this case, there are three transmission manners for the AMP signal field.

Solution 1: The AMP signal field is transmitted with a predefined MCS. Alternatively, for uplink transmission and downlink transmission, the AMP signal field is separately transmitted with different predefined MCSs. That is, for the uplink, the AMP signal field is transmitted with a predefined MCS; and for the downlink, the AMP signal field is transmitted with another predefined MCS.

Solution 2: The AMP signal field may be divided into a first signal subfield (denoted as SIG1) and a second signal subfield (denoted as SIG2). The SIG1 may be transmitted with a predefined MCS, so that reliability of the SIG1 is higher than that of the SIG2 and the payload. Alternatively, for uplink transmission and downlink transmission, the SIG1 is separately transmitted with different predefined MCSs. That is, for the uplink, the SIG1 field is transmitted with a predefined MCS; and for the downlink, the SIG1 field is transmitted with another predefined MCS. For example, the MCS used by the SIG1 field for the downlink is lower than the MCS used by the SIG1 field for the uplink. The SIG1 may indicate an MCS of the SIG2. The MCS of the SIG2 may be related to the MCS of the payload. For example, the MCS of the SIG2 is lower than the MCS of the payload, so that reliability of the SIG2 is higher than that of the payload.

Solution 3: There is an association relationship between an MCS of the AMP signal field and the MCS of the payload, or the MCS of the AMP signal field is determined based on the MCS of the payload. For example, a difference between an MCS index (index) of the payload and an MCS index of the AMP signal field is a fixed value, which is denoted as delta. Herein, delta is an integer greater than or equal to 0, that is, the MCS index of the payload is greater than or equal to the MCS index of the AMP signal field. Delta may be predefined. For example, if the MCS index of the payload is 5, and the predefined delta is 2, the MCS index of the AMP signal field is 3, that is, the AMP signal field is transmitted with an MCS whose MCS index is equal to 3.

It may be understood that, for Case 3, this embodiment of this application cannot be implemented in combination with the embodiment shown in FIG. 6, for example, the AMP signal field does not include the first information, but can be implemented in combination with the embodiment shown in FIG. 7. It may be further understood that, although the AMP signal field does not include the first information, the MCS of the payload may still be an MCS in an MCS parameter table. In other words, the MCS parameter table in the embodiment shown in FIG. 6 is applicable to a case in which the AMP synchronization field indirectly or implicitly indicates the MCS of the payload. In a possible implementation, the MCS of the payload that is indirectly or implicitly indicated by the AMP synchronization field may be an MCS in an MCS parameter table. For example, the MCS parameter table may include one or more of the foregoing Table 3a to Table 5c.

Case 4 (Case 4): The AMP synchronization field indirectly/implicitly indicates uplink transmission or downlink transmission. In this case, there are two transmission manners for the AMP signal field.

Solution 1: The AMP signal field is transmitted with a predefined MCS. Alternatively, for uplink transmission and downlink transmission, the AMP signal field is separately transmitted with different predefined MCSs. That is, for the uplink, the AMP signal field is transmitted with a predefined MCS; and for the downlink, the AMP signal field is transmitted with another predefined MCS. For example, when the AMP synchronization field indirectly indicates uplink transmission, an MCS of the AMP signal field is a predefined first MCS, or when the AMP synchronization field indicates downlink transmission, an MCS of the AMP signal field is a predefined second MCS, where the first MCS is different from the second MCS. For example, the first MCS is higher than the second MCS, that is, a rate in the first MCS is higher than a rate in the second MCS, and/or a modulation order of a modulation scheme in the first MCS is higher than a modulation order of a modulation scheme in the second MCS.

Solution 2: The AMP signal field may be divided into a first signal subfield (denoted as SIG1) and a second signal subfield (denoted as SIG2). The SIG1 may be transmitted with a predefined MCS, so that reliability of the SIG1 is higher than reliability of the SIG2 and reliability of the payload. Alternatively, for uplink transmission and downlink transmission, the SIG1 is separately transmitted with different predefined MCSs. That is, for the uplink, the SIG1 field is transmitted with a predefined MCS; and for the downlink, the SIG1 field is transmitted with another predefined MCS. For example, when the AMP synchronization field indirectly indicates uplink transmission, the MCS of the SIG1 field is a predefined first MCS, or when the AMP synchronization field indirectly indicates downlink transmission, the MCS of the SIG1 field is a predefined second MCS, where the first MCS is different from the second MCS. For example, the first MCS is higher than the second MCS, that is, a rate in the first MCS is higher than a rate in the second MCS, and/or a modulation order of a modulation scheme in the first MCS is higher than a modulation order of a modulation scheme in the second MCS.

The SIG1 may indicate an MCS of the SIG2 and/or an MCS of the payload. It may be understood that, when the SIG1 indicates the MCS of the SIG2, the MCS of the payload may be adaptively adjusted based on the MCS of the SIG2, or the MCS of the payload may be determined based on the MCS of the SIG2, or the MCS of the payload is related to the MCS of SIG2. Similarly, when the SIG1 indicates the MCS of the payload (for example, the SIG1 includes the foregoing first information), the MCS of the SIG2 may be adaptively adjusted based on the MCS of the payload, or the MCS of the SIG2 may be determined based on the MCS of the payload, or the MCS of the SIG2 is related to the MCS of the payload. For example, the MCS of the SIG2 is lower than the MCS of the payload (for example, a rate of the SIG2 is lower than a rate of the payload, and/or a modulation order of the SIG2 is lower than a modulation order of the payload), so that reliability of the SIG2 is higher than that of the payload.

In a possible implementation, for Case 4, when this embodiment of this application is implemented in combination with the embodiment shown in FIG. 6, the AMP signal field includes first information, and the first information may indicate an MCS of the payload, and the MCS of the payload is an MCS in an MCS parameter table. The MCS parameter table may include one or more of the foregoing Table 3a to Table 5c. Details are not described herein again.

Case 5 (Case 5): The AMP synchronization field indirectly/implicitly indicates an MCS of the AMP signal field, and uplink transmission or downlink transmission. In this case, the AMP signal field is transmitted according to an MCS specified by the AMP synchronization field. For example, the MCS of the AMP signal field may be an MCS in an MCS parameter table, and an MCS corresponding to downlink transmission and an MCS corresponding to uplink transmission in the MCS parameter table are not completely the same. For example, the MCS parameter table may include one or more of the foregoing Table 4a to Table 5c.

In a possible implementation, for Case 5, when this embodiment of this application is implemented in combination with the embodiment shown in FIG. 6, the AMP signal field includes first information, and the first information may indicate an MCS of the payload, and the MCS of the payload is an MCS in an MCS parameter table. The MCS parameter table may include one or more of the foregoing Table 3a to Table 5c. Details are not described herein again. Generally, to correctly demodulate data, the MCS of the AMP signal field is lower than the MCS of the payload (for example, a rate of the AMP signal field is lower than a rate of the payload, and/or a modulation order of a modulation scheme of the AMP signal field is lower than a modulation order of a modulation scheme of the payload), so that reliability of the AMP signal field is higher than that of the payload.

It may be understood that the foregoing cases are merely examples, and there may be more cases in actual application. This is not limited in embodiments of this application.

In this embodiment of this application, a plurality of transmission manners are designed for the AMP SIG field, so that an air interface occupancy time of the AMP PPDU (for example, the AMP SIG field) can be reduced while reliability of the AMP PPDU (for example, the AMP SIG field) is improved.

The foregoing content describes in detail the methods provided in this application. To facilitate implementation of the foregoing solutions in embodiments of this application, embodiments of this application further provide corresponding apparatuses or devices.

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, and is merely a logical function division. In actual implementation, another division manner may be used. The following describes in detail the communication apparatus in embodiments of this application with reference to FIG. 11 to FIG. 13.

FIG. 11 is a diagram of a structure of a communication apparatus according to an embodiment of this application. As shown in FIG. 11, the communication apparatus includes a transceiver module 10 and a processing module 20. The transceiver module 10 may implement a corresponding communication function, and the processing module 20 is configured to perform data processing. For example, the transceiver module 10 may also be referred to as an interface, a communication interface, or a communication module.

In some embodiments of this application, the communication apparatus may be the first communication apparatus shown above. To be specific, the communication apparatus shown in FIG. 11 may be configured to perform the steps, the functions, or the like performed by the first communication apparatus in the foregoing method embodiments. For example, the communication apparatus may be the first communication apparatus or a chip, a functional module, or the like disposed in the first communication apparatus. This is not limited in embodiments of this application. The transceiver module 10 is configured to perform a sending/receiving-related operation of the first communication apparatus in the foregoing method embodiments, and the processing module 20 is configured to perform a processing-related operation of the first communication apparatus in the foregoing method embodiments.

For example, the processing module 20 is configured to generate a PPDU, where the PPDU includes a signal field and a payload, the signal field includes first information, the first information indicates an MCS of the payload, the MCS of the payload is an MCS in an MCS parameter table, and an MCS corresponding to downlink transmission and an MCS corresponding to uplink transmission in the MCS parameter table are not completely the same; and the transceiver module 10 is configured to send the PPDU.

It may be understood that the transceiver module 10 may send the PPDU to another communication apparatus, or the transceiver module 10 outputs the PPDU from the processing module 20 to another component, another functional module, or the like in the communication apparatus. Related descriptions of outputting other information by the transceiver module are similar. Details are not described below again.

In this embodiment of this application, for descriptions of the PPDU, the signal field, the payload, the MCS parameter table, and the like, refer to the descriptions in the foregoing method embodiments (as shown in FIG. 6). Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 6). Details are not described herein again. In addition, for technical effects of this embodiment of this application, refer to the technical effects in the foregoing method embodiments (as shown in FIG. 6). For brevity, details are not described herein again.

For example, the processing module 20 is configured to generate a PPDU, where the PPDU includes a signal field and a payload, the signal field includes second information, the second information indicates a length of the payload, and the second information meets the following condition: When the PPDU is an uplink PPDU, a length of the second information is a first value, or when the PPDU is a downlink PPDU, a length of the second information is a second value, where the first value is less than the second value; and the transceiver module 10 is configured to send the PPDU.

In this embodiment of this application, for descriptions of the PPDU, the signal field, the payload, the second information, and the like, refer to the descriptions in the foregoing method embodiments (as shown in FIG. 7). Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 7). Details are not described herein again. In addition, for technical effects of this embodiment of this application, refer to the technical effects in the foregoing method embodiments (as shown in FIG. 7). For brevity, details are not described herein again.

For example, the processing module 20 is configured to generate a PPDU, where the PPDU includes a synchronization field and a signal field, and the synchronization field is different from a WUR synchronization field; and the transceiver module 10 is configured to send the PPDU.

In this embodiment of this application, for descriptions of the PPDU, the synchronization field, the signal field, the WUR synchronization field, and the like, refer to the descriptions in the foregoing method embodiments (as shown in FIG. 10). Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 10). Details are not described herein again. In addition, for technical effects of this embodiment of this application, refer to the technical effects in the foregoing method embodiments (as shown in FIG. 10). For brevity, details are not described herein again.

Still refer to FIG. 11. In some other embodiments of this application, the communication apparatus may be the second communication apparatus shown above. To be specific, the communication apparatus shown in FIG. 11 may be configured to perform the steps, the functions, or the like performed by the second communication apparatus in the foregoing method embodiments. For example, the communication apparatus may be the second communication apparatus, or a chip, a functional module, or the like disposed in the second communication apparatus. This is not limited in embodiments of this application. The transceiver module 10 is configured to perform a sending/receiving-related operation of the second communication apparatus in the foregoing method embodiments, and the processing module 20 is configured to perform a processing-related operation of the second communication apparatus in the foregoing method embodiments.

For example, the transceiver module 10 is configured to receive a PPDU, where the PPDU includes a signal field and a payload, the signal field includes first information, the first information indicates an MCS of the payload, the MCS of the payload is an MCS in an MCS parameter table, and an MCS corresponding to downlink transmission and an MCS corresponding to uplink transmission in the MCS parameter table are not completely the same; and the processing module 20 is configured to process the PPDU.

It may be understood that the transceiver module 10 may receive the PPDU from another communication apparatus, or the transceiver module 10 inputs the PPDU from another component or another functional module in the communication apparatus, or the like. Related descriptions of inputting other information by the transceiver module are similar. Details are not described below again.

In this embodiment of this application, for descriptions of the PPDU, the signal field, the payload, the MCS parameter table, and the like, refer to the descriptions in the foregoing method embodiments (as shown in FIG. 6). Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 6). Details are not described herein again. In addition, for technical effects of this embodiment of this application, refer to the technical effects in the foregoing method embodiments (as shown in FIG. 6). For brevity, details are not described herein again.

For example, the transceiver module 10 is configured to receive a PPDU, where the PPDU includes a signal field and a payload, the signal field includes second information, the second information indicates a length of the payload, and the second information meets the following condition: When the PPDU is an uplink PPDU, a length of the second information is a first value, or when the PPDU is a downlink PPDU, a length of the second information is a second value, where the first value is less than the second value; and the processing module 20 is configured to process the PPDU.

In this embodiment of this application, for descriptions of the PPDU, the signal field, the payload, the second information, and the like, refer to the descriptions in the foregoing method embodiments (as shown in FIG. 7). Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 7). Details are not described herein again. In addition, for technical effects of this embodiment of this application, refer to the technical effects in the foregoing method embodiments (as shown in FIG. 7). For brevity, details are not described herein again.

For example, the transceiver module 10 is configured to receive a PPDU, where the PPDU includes a synchronization field and a signal field, and the synchronization field is different from a WUR synchronization field; and the processing module 20 is configured to process the PPDU.

In this embodiment of this application, for descriptions of the PPDU, the synchronization field, the signal field, the WUR synchronization field, and the like, refer to the descriptions in the foregoing method embodiments (as shown in FIG. 10). Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 10). Details are not described herein again. In addition, for technical effects of this embodiment of this application, refer to the technical effects in the foregoing method embodiments (as shown in FIG. 10). For brevity, details are not described herein again.

The foregoing describes the communication apparatus in embodiments of this application, and the following describes a possible product form of the communication apparatus. It should be understood that a product in any form that has a function of the communication apparatus in FIG. 11 falls within the protection scope of embodiments of this application. It should be further understood that the following descriptions are merely examples, and do not limit the product form of the communication apparatus in embodiments of this application.

In a possible implementation, in the communication apparatus shown in FIG. 11, the processing module 20 may be one or more processors, and the transceiver module 10 may be a transceiver; or the transceiver module 10 may be a sending module and a receiving module, the sending module may be a transmitter, the receiving module may be a receiver, and the sending module and the receiving module are integrated into one device, for example, a transceiver. In embodiments of this application, the processor and the transceiver may be coupled, or the like. A manner of connection between the processor and the transceiver is not limited in embodiments of this application. In a process of performing the foregoing method, a process of sending information (for example, sending a PPDU) in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information (for example, receiving a PPDU) in the foregoing method may be understood as a process of receiving the input information by the processor. When the processor receives the input information, the transceiver receives the information, and inputs the information into the processor. Further, after the transceiver receives the information, other processing may need to be performed on the information before the information is input into the processor.

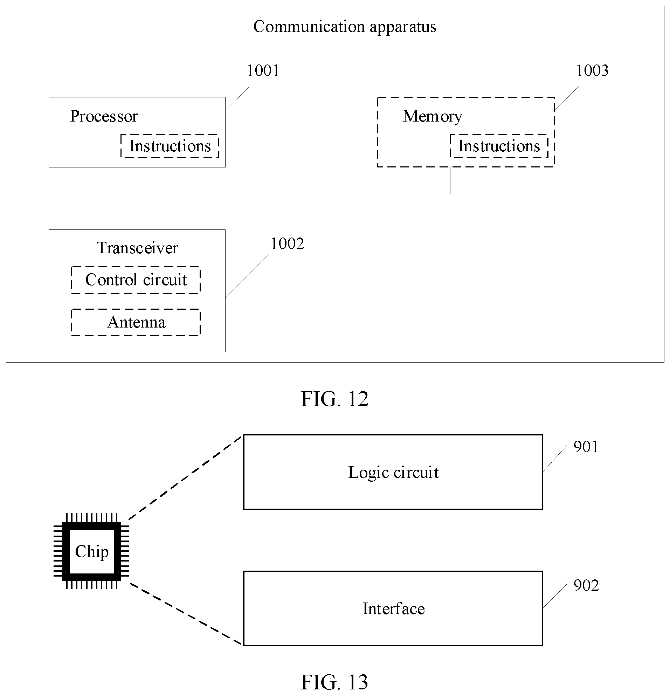

FIG. 12 is a diagram of another structure of a communication apparatus according to an embodiment of this application. The communication apparatus may be a first communication apparatus, a second communication apparatus, or a chip in the first communication apparatus or the second communication apparatus. FIG. 12 shows only main components of the communication apparatus. In addition to a processor 1001, the communication apparatus may further include a transceiver 1002, a memory 1003, and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. In a design, the transceiver 1002 may be referred to as a transceiver unit, a transceiver machine, a transceiver circuit, or the like, and is configured to implement a transceiver function. The transceiver 1002 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. In another design, the transceiver 1002 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user, and output data to the user.

After the communication apparatus is powered on, the processor 1001 may read the software program in the memory 1003, interpret and execute instructions of the software program, process data of the software program, and perform control on a medium access control (medium access control, MAC) layer and a physical layer (physical layer, PHY), to implement the methods in embodiments of this application. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

For example, when the communication apparatus is configured to perform the steps, methods, or functions performed by the first communication apparatus in the method embodiment shown in FIG. 6, the processor 1001 may be configured to perform step S101 in FIG. 6, and/or configured to perform another process of the technology described in this specification; and the transceiver 1002 may be configured to perform step S102 in FIG. 6, and/or configured to perform another process of the technology described in this specification.

For example, when the communication apparatus is configured to perform the steps, methods, or functions performed by the second communication apparatus in the method embodiment shown in FIG. 6, the processor 1001 may be configured to perform step S103 in FIG. 6, and/or configured to perform another process of the technology described in this specification; and the transceiver 1002 may be configured to receive a PPDU, and/or configured to perform another process of the technology described in this specification.

For example, when the communication apparatus is configured to perform the steps, methods, or functions performed by the first communication apparatus in the method embodiment shown in FIG. 7, the processor 1001 may be configured to perform step S201 in FIG. 7, and/or configured to perform another process of the technology described in this specification; and the transceiver 1002 may be configured to perform step S202 in FIG. 7, and/or configured to perform another process of the technology described in this specification.

For example, when the communication apparatus is configured to perform the steps, methods, or functions performed by the second communication apparatus in the method embodiment shown in FIG. 7, the processor 1001 may be configured to perform step S203 in FIG. 7, and/or configured to perform another process of the technology described in this specification; and the transceiver 1002 may be configured to receive a PPDU, and/or configured to perform another process of the technology described in this specification.

For example, when the communication apparatus is configured to perform the steps, methods, or functions performed by the first communication apparatus in the method embodiment shown in FIG. 10, the processor 1001 may be configured to perform step S301 in FIG. 10, and/or configured to perform another process of the technology described in this specification; and the transceiver 1002 may be configured to perform step S302 in FIG. 10, and/or configured to perform another process of the technology described in this specification.

For example, when the communication apparatus is configured to perform the steps, methods, or functions performed by the second communication apparatus in the method embodiment shown in FIG. 10, the processor 1001 may be configured to perform step S303 in FIG. 10, and/or configured to perform another process of the technology described in this specification; and the transceiver 1002 may be configured to receive a PPDU, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program is run on the processor 1001, to enable the communication apparatus to perform the methods described in the foregoing method embodiments. The computer program may be embedded in the processor 1001. In this case, the processor 1001 may be implemented by hardware.

In an implementation, the communication apparatus may include a circuit. The circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (N-channel oxide semiconductor, NMOS), a P-channel metal oxide semiconductor (P-channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may further have more components and the like than those shown in FIG. 12. This is not limited in embodiments of this application. The foregoing method performed by the processor and the transceiver is merely an example. For specific steps performed by the processor and the transceiver, refer to the descriptions in the foregoing method embodiments.

In another possible implementation, in the communication apparatus shown in FIG. 11, the processing module 20 may be one or more logic circuits, and the transceiver module 10 may be an input/output interface, or may be referred to as a communication interface, an interface circuit, an interface, or the like. Alternatively, the transceiver module 10 may be a sending module and a receiving module. The sending module may be an output interface, and the receiving module may be an input interface. The sending module and the receiving module are integrated into one module, for example, an input/output interface. FIG. 13 is a diagram of still another structure of a communication apparatus according to an embodiment of this application. As shown in FIG. 13, the communication apparatus shown in FIG. 13 includes a logic circuit 901 and an interface 902. That is, the processing module 20 may be implemented by the logic circuit 901, and the transceiver module 10 may be implemented by the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 13 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in embodiments of this application.

For example, when the communication apparatus is configured to perform the method, the function, or the step performed by the first communication apparatus in the method embodiment shown in FIG. 6, the logic circuit 901 is configured to generate a PPDU, where the PPDU includes a signal field and a payload, the signal field includes first information, the first information indicates an MCS of the payload, the MCS of the payload is an MCS in an MCS parameter table, and an MCS corresponding to downlink transmission and an MCS corresponding to uplink transmission in the MCS parameter table are not completely the same; and the interface 902 is configured to output the PPDU.

For example, when the communication apparatus is configured to perform the method, the function, or the step performed by the second communication apparatus in the method embodiment shown in FIG. 6, the interface 902 is configured to input a PPDU, where the PPDU includes a signal field and a payload, the signal field includes first information, the first information indicates an MCS of the payload, the MCS of the payload is an MCS in an MCS parameter table, and an MCS corresponding to downlink transmission and an MCS corresponding to uplink transmission in the MCS parameter table are not completely the same; and the logic circuit 901 is configured to process the PPDU.

In this embodiment of this application, for specific descriptions of the PPDU, the signal field, the payload, the MCS parameter table, and the like, refer to the foregoing method embodiments (as shown in FIG. 6). Details are not described herein again.

For example, when the communication apparatus is configured to perform the method, the function, or the step performed by the first communication apparatus in the method embodiment shown in FIG. 7, the logic circuit 901 is configured to generate a PPDU, where the PPDU includes a signal field and a payload, the signal field includes second information, the second information indicates a length of the payload, and the second information meets the following condition: When the PPDU is an uplink PPDU, a length of the second information is a first value, or when the PPDU is a downlink PPDU, a length of the second information is a second value, where the first value is less than the second value; and the interface 902 is configured to output the PPDU.

For example, when the communication apparatus is configured to perform the method, the function, or the step performed by the second communication apparatus in the method embodiment shown in FIG. 7, the interface 902 is configured to input a PPDU, where the PPDU includes a signal field and a payload, the signal field includes second information, the second information indicates a length of the payload, and the second information meets the following condition: When the PPDU is an uplink PPDU, a length of the second information is a first value, or when the PPDU is a downlink PPDU, a length of the second information is a second value, where the first value is less than the second value; and the logic circuit 901 is configured to process the PPDU.

In this embodiment of this application, for descriptions of the PPDU, the signal field, the payload, the second information, and the like, refer to the descriptions in the foregoing method embodiments (as shown in FIG. 7). Details are not described herein again.

For example, when the communication apparatus is configured to perform the method, the function, or the step performed by the first communication apparatus in the method embodiment shown in FIG. 10, the logic circuit 901 is configured to generate a PPDU, where the PPDU includes a synchronization field and a signal field, and the synchronization field is different from a WUR synchronization field; and the interface 902 is configured to output the PPDU.

For example, when the communication apparatus is configured to perform the method, the function, or the step performed by the second communication apparatus in the method embodiment shown in FIG. 10, the interface 902 is configured to input a PPDU, where the PPDU includes a synchronization field and a signal field, and the synchronization field is different from a WUR synchronization field; and the logic circuit 901 is configured to process the PPDU.

In this embodiment of this application, for descriptions of the PPDU, the signal field, the synchronization field (mainly a transmission manner of the synchronization field), and the like, refer to the descriptions in the foregoing method embodiments (as shown in FIG. 10). Details are not described herein again.

It may be understood that the communication apparatus shown in embodiments of this application may implement the methods provided in embodiments of this application in a form of hardware, or may implement the methods provided in embodiments of this application in a form of software. This is not limited in embodiments of this application.

For a specific implementation of the embodiment shown in FIG. 13, refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in any one of the foregoing embodiments.

In addition, this application further provides a computer program. The computer program is configured to implement operations and/or processing performed by the first communication apparatus in the methods provided in this application.

This application further provides a computer program. The computer program is configured to implement operations and/or processing performed by the second communication apparatus in the methods provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer program product. The computer program product includes computer code or a computer program. When the computer code or the computer program is run on a computer, operations and/or processing performed by the first communication apparatus in the methods provided in this application are/is performed.

This application further provides a computer program product. The computer program product includes computer code or a computer program. When the computer code or the computer program is run on a computer, operations and/or processing performed by the second communication apparatus in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, to be specific, may be located in one place, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical layer protocol data unit transmission method, comprising:
generating a physical layer protocol data unit PPDU, wherein the PPDU comprises a signal field and a payload, the signal field comprises first information, the first information indicates a modulation and coding scheme MCS of the payload, the MCS of the payload is an MCS in an MCS parameter table, and an MCS corresponding to downlink transmission and an MCS corresponding to uplink transmission in the MCS parameter table are not completely the same; and
sending the PPDU.

2. A physical layer protocol data unit transmission method, comprising:
receiving a physical layer protocol data unit PPDU, wherein the PPDU comprises a signal field and a payload, the signal field comprises first information, the first information indicates a modulation and coding scheme MCS of the payload, the MCS of the payload is an MCS in an MCS parameter table, and an MCS corresponding to downlink transmission and an MCS corresponding to uplink transmission in the MCS parameter table are not completely the same; and
processing the PPDU.

3. The method according to claim 1 or 2, wherein that the MCS corresponding to downlink transmission and the MCS corresponding to uplink transmission in the MCS parameter table are not completely the same comprises: in the MCS parameter table, a maximum rate of the MCS corresponding to uplink transmission is greater than a maximum rate of the MCS corresponding to downlink transmission, and/or in the MCS parameter table, a minimum rate of the MCS corresponding to uplink transmission is greater than a minimum rate of the MCS corresponding to downlink transmission.

4. The method according to any one of claims 1 to 3, wherein that the MCS corresponding to downlink transmission and the MCS corresponding to uplink transmission in the MCS parameter table are not completely the same comprises:
a modulation scheme of the MCS corresponding to downlink transmission in the MCS parameter table is on-off keying OOK modulation; and
a modulation scheme of the MCS corresponding to uplink transmission in the MCS parameter table comprises one or more of the following: phase shift keying PSK modulation, frequency-shift keying FSK modulation, OOK modulation, spread spectrum, or complementary code keying CCK modulation.

5. The method according to any one of claims 1 to 4, wherein the MCS parameter table comprises one or more of Table 3a, Table 3b, Table 3c, Table 4a, Table 4b, Table 5a, Table 5b, or Table 5c.

6. The method according to any one of claims 1 to 5, wherein the signal field further comprises second information, and the second information indicates a length of the payload; and
the second information meets the following condition: when the PPDU is an uplink PPDU, a length of the second information is a first value, or when the PPDU is a downlink PPDU, a length of the second information is a second value, wherein the first value is less than the second value.

7. The method according to claim 6, wherein the length of the payload meets the following condition: when the PPDU is an uplink PPDU, the length of the payload is equal to a product of a value of the second information and K1, or when the PPDU is a downlink PPDU, the length of the payload is equal to a product of a value of the second information and K2, wherein K1 is greater than K2, and K2 is a positive integer.

8. A physical layer protocol data unit transmission method, comprising:
generating a physical layer protocol data unit PPDU, wherein the PPDU comprises a signal field and a payload, the signal field comprises second information, the second information indicates a length of the payload, and the second information meets the following condition: when the PPDU is an uplink PPDU, a length of the second information is a first value, or when the PPDU is a downlink PPDU, a length of the second information is a second value, wherein the first value is less than the second value; and
sending the PPDU.

9. A physical layer protocol data unit transmission method, comprising:
receiving a physical layer protocol data unit PPDU, wherein the PPDU comprises a signal field and a payload, the signal field comprises second information, the second information indicates a length of the payload, and the second information meets the following condition: when the PPDU is an uplink PPDU, a length of the second information is a first value, or when the PPDU is a downlink PPDU, a length of the second information is a second value, wherein the first value is less than the second value; and
processing the PPDU.

10. The method according to claim 8 or 9, wherein the length of the payload meets the following condition: when the PPDU is an uplink PPDU, the length of the payload is equal to a product of a value of the second information and K1, or when the PPDU is a downlink PPDU, the length of the payload is equal to a product of a value of the second information and K2, wherein K1 is greater than K2, and K2 is a positive integer.

11. The method according to any one of claims 1 to 10, wherein the PPDU further comprises a synchronization field, and the synchronization field is the same as a wake-up radio WUR synchronization field; and the signal field further comprises third information, and the third information indicates that the PPDU is an ambient power physical layer protocol data unit AMP PPDU.

12. The method according to claim 11, wherein an MCS of the signal field comprises any one of the following:
a rate of 62.5 kbps and on-off keying OOK modulation; or
a rate of 250 kbps and on-off keying OOK modulation.

13. The method according to any one of claims 1 to 12, wherein the signal field further comprises information indicating one or more of the following: a version number of the PPDU, a DL/UL indication of the PPDU, a channel occupancy time, or a cyclic redundancy check code.

14. The method according to any one of claims 1 to 10, wherein the PPDU further comprises a synchronization field, and the synchronization field is different from a wake-up radio WUR synchronization field.

15. The method according to claim 14, wherein an MCS of the signal field is predefined; or
the signal field comprises a first signal subfield and a second signal subfield, an MCS of the first signal subfield is predefined, the first information is located in the first signal subfield, and the first signal subfield indicates an MCS of the second signal subfield.

16. The method according to claim 15, wherein the synchronization field indirectly indicates a DL/UL indication of the PPDU.

17. The method according to claim 16, wherein that the MCS of the signal field is predefined comprises:
when the synchronization field indicates uplink, the MCS of the signal field is a predefined first MCS, or when the synchronization field indicates downlink, the MCS of the signal field is a predefined second MCS, wherein the first MCS is different from the second MCS.

18. The method according to claim 16, wherein that the MCS of the first signal subfield is predefined comprises:
when the synchronization field indicates uplink, the MCS of the first signal subfield is a predefined first MCS, or when the synchronization field indicates downlink, the MCS of the first signal subfield is a predefined second MCS, wherein the first MCS is different from the second MCS.

19. The method according to claim 14, wherein the synchronization field indirectly indicates an MCS of the signal field.

20. The method according to claim 19, wherein the MCS of the signal field is any one of Table 3a, Table 3b, Table 3c, Table 4a, Table 4b, Table 5a, Table 5b, or Table 5c.

21. The method according to claim 19, wherein the synchronization field further indirectly indicates a DL/UL indication of the PPDU.

22. The method according to claim 21, wherein the MCS of the signal field is any one of Table 4a, Table 4b, Table 5a, Table 5b, or Table 5c.

23. A communication apparatus, comprising a module configured to perform the method according to any one of claims 1 to 22.

24. A communication apparatus, comprising:
one or more processors, wherein the one or more processors are coupled to one or more memories; and
the one or more memories are configured to store a computer program, and the one or more processors are configured to execute the computer program stored in the one or more memories, to enable the communication apparatus to perform the method according to any one of claims 1 to 22.

25. A readable storage medium, wherein the readable storage medium is configured to store a computer program, and when the computer program is executed by a processor, a communication apparatus comprising the processor is enabled to perform the method according to any one of claims 1 to 22.

26. A computer program product, wherein when the computer program product is executed, the method according to any one of claims 1 to 22 is performed.
